# FASCICULE DE BREVET EUROPEEN

(11) **EP 2 504 101 B1**
(45) Date de publication et mention de la délivrance du brevet: **16.10.2019**
(21) Numéro de dépôt: 10799095.4
(22) Date de dépôt: 23.11.2010
(51) Int. Cl.: B01L 1/02, B08B 15/02, B25J 21/02, F16J 13/18, F16J 13/20, F16J 13/22, G21F 7/005

(54) **PERFECTIONNEMENTS A LA JONCTION ETANCHE ET AU TRANSFERT ETANCHE ENTRE DEUX ENCEINTES EN VUE D'UN TRANSFERT ASEPTIQUE ENTRE ELLES.**
VERBESSERTE DICHTE VERBINDUNG UND DICHTE ÜBERTRAGUNG ZWISCHEN ZWEI GEHÄUSEN BEI EINER ASEPTISCHEN ÜBERTRAGUNG
IMPROVEMENTS TO THE TIGHT CONNECTION AND TIGHT TRANSFER BETWEEN TWO HOUSINGS IN VIEW OF AN ASEPTIC TRANSFER THEREBETWEEN

(30) Priorité: 23.11.2009 FR 0958267
(43) Date de publication de la demande: 03.10.2012
(73) Titulaire: Sartorius Stedim Aseptics, 65100 Lourdes (FR)
(72) Inventeur: ARMAU, Stéphanie, F-Ossun 65380 (FR); GAY, Isabelle, F-13124 Peypin (FR); LABEDAN, Mathieu, F-33850 Loegnan (FR); NODIN, Gaëlle, F-83470 Saint Maximin La Sainte Baume (FR)
(74) Mandataire: Derambure, Christian
(86) Numéro de dépôt international: PCT/FR2010/052490
(87) Numéro de publication internationale: WO 2011/061463

(56) Documents cités:
- EP-A1- 0 586 307
- EP-A2- 0 830 896
- WO-A2-96/21615
- FR-A1- 2 787 235
- FR-A1- 2 833 745
- US-A- 3 489 298
- US-A1- 2009 212 054

## Description

L'invention concerne des perfectionnements apportés à la jonction étanche et au transfert étanche entre deux enceintes, en vue d'un transfert aseptique entre elles, limitant les risques de contamination à l'endroit des lignes critiques intérieure et extérieure.

L'invention a plus spécialement pour objet un dispositif de jonction étanche entre deux enceintes, un dispositif de transfert aseptique comprenant un tel dispositif de jonction étanche, et une première enceinte et une seconde enceinte faisant partie d'un tel dispositif de transfert aseptique, le procédé de mise en oeuvre du dispositif de jonction étanche et le procédé de mise en oeuvre du dispositif de transfert étanche.

On connaît déjà des dispositifs de transfert aseptique de type à double porte. A titre purement exemplatif, on peut citer les dispositifs connus sous la maque BIOSAFE® et le document EP-A-0688020 qui décrit un dispositif de jonction étanche entre deux enceintes isolées d'un milieu extérieur.

Avec une telle réalisation, font partie d'une première enceinte - par exemple une enceinte fixe, rigide, et de relativement grande taille - une structure incluant une première paroi pourvue d'une première ouverture limitée par une première bride annulaire formant, d'une part interface (avec une seconde bride), d'autre part siège pour un premier vantail d'une première porte. La première porte est supportée par la structure par l'intermédiaire de moyens porteurs, de nature mécanique, mobiles ou déformables, Le premier vantail est monté à déplacement - à savoir à rotation - et agencé pour se trouver à l'état fermé ou à l'état ouvert où, respectivement, il ferme ou ouvre la première ouverture. Des moyens de manoeuvre de déplacement sont aptes à déplacer le premier vantail.

Font partie d'une seconde enceinte - par exemple un conteneur déplaçable, à usage unique, flexible au moins pour partie, et de taille plus petite - une seconde paroi pourvue d'une seconde ouverture limitée par une seconde bride annulaire formant d'une part interface (avec la première bride), d'autre part siège pour un second vantail d'une seconde porte monté à déplacement et agencé pour se trouver à l'état fermé ou à l'état ouvert où, respectivement, il ferme ou ouvre la seconde ouverture.

La première bride, le premier vantail, la seconde bride et le second vantail ont, chacun, une face intérieure située vers l'intérieur, respectivement, de la première enceinte, de la seconde enceinte, et une face extérieure au contact du milieu extérieur aux deux enceintes.

La première bride et la seconde bride sont complémentaires et aptes à être maintenues de façon amovible plaquées l'une contre l'autre par leurs faces extérieures, de façon hermétique, en étant ainsi isolées du milieu extérieur, grâce à des moyens de maintien amovible dont elles sont pourvues, par exemple un mécanisme à cames.

La première porte et la seconde porte sont complémentaires et leurs vantaux sont aptes à être plaqués l'un contre l'autre par leurs faces extérieures de façon hermétique, en étant ainsi isolées du milieu extérieur, et à être maintenus ainsi plaqués de façon amovible, grâce à des moyens de solidarisation amovible dont ils sont pourvus.

À cet effet, les brides et les vantaux ont des faces respectives destinées à plaquées l'une contre l'autre dont les formes sont complémentaires et il peut être prévu là ou nécessaire des joints d'étanchéité.

Il est également prévu des moyens de manoeuvre de déplacement, aptes à déplacer le premier vantail de la première porte, auquel peut être solidarisé le second vantail de la seconde porte, entre ses états fermé et ouvert, ainsi que des moyens de commande de ces moyens de manoeuvre de déplacement.

Le procédé de mise en oeuvre d'un dispositif de jonction étanche du type précédent comprend les étapes opératoires successives suivantes :
▪ on dispose de la première enceinte dont le premier vantail de la première porte est à l'état fermé et de la seconde enceinte dont le second vantail de la seconde porte est à l'état fermé ;
▪ on amène les deux enceintes à se trouver à proximité l'une de l'autre et on plaque la première bride et la seconde bride l'une contre l'autre de façon hermétique par leurs faces extérieures et on amène le vantail de la première porte et le vantail de la seconde porte à être plaqués l'un contre l'autre de façon hermétique ;
▪ on maintient la première bride et la seconde bride, d'une part et le premier vantail et le second vantail, d'autre part, et on manoeuvre le premier vantail pour le déplacer et l'amener à l'état ouvert et ainsi amener également le second vantail à l'état ouvert.

Ainsi, la première enceinte et la seconde enceinte communiquent entre elles par leurs ouvertures respectives à l'état ouvert, un espace de communication étant ménagé entre les deux enceintes permettant de faire passer entre elles un certain contenu et ainsi de le transférer de l'une à l'autre des deux enceintes. Cet espace de communication est constitué d'un espace d'entrée/sortie dans la première enceinte et d'un espace d'entrée/sortie dans la seconde enceinte, ces deux espaces d'entrée/sortie communiquant entre eux.

Le procédé de mise en oeuvre d'un dispositif de transfert étanche entre deux enceintes incluant un tel dispositif de jonction étanche comprend les étapes opératoires successives suivantes :
▪ on dispose des deux enceintes à l'état fermé, l'une contenant originellement un certain contenu à transférer;
▪ on met en oeuvre le dispositif de jonction étanche comme il vient d'être indiqué ;
▪ une fois que le premier vantail de la première porte et le second vantail de la seconde porte sont à l'état ouvert et que la première enceinte et la seconde enceinte communiquent entre elles par l'espace de communication, on fait passer le certain contenu de l'enceinte où il se trouvait originellement à l'autre enceinte où il doit se trouver finalement;
▪ une fois ce transfert effectué, on amène les vantaux de la première porte et de la seconde porte à l'état fermé ;
▪ puis on dissocie les deux enceintes.

Selon les cas, le certain contenu se trouve originellement dans la première enceinte ou dans la seconde enceinte.

Des transferts tels que ceux dont il s'agit peuvent être nécessaires dans nombre de domaines techniques, notamment mais non exclusivement le domaine biopharmaceutique. L'invention s'intéresse tout spécialement à ce domaine, comme à ceux qui peuvent être considérés comme analogues au regard des exigences imposées.

Le contenu - à transférer ou transféré - n'est pas en soi crucial au regard de l'invention si ce n'est qu'il a vocation à, et donc doit pouvoir, être transféré. Dans le domaine biopharmaceutique, il peut s'agir par exemple d'un objet stérile tel qu'un récipient, un élément de récipient tel qu'un bouchon, une seringue, mais aussi des éléments de contrôle d'environnement, voire même des déchets produits lors d'opération de fabrication ou de traitement, déchets qu'il s'agit de transférer afin de les éliminer...

Des transferts, tels que ceux ici considérés, interviennent le plus souvent dans le cadre de processus plus complexes dans lesquels le certain contenu subit une ou plusieurs opérations avant et/ou après le transfert. Ces opérations consistent en fabrication, assemblage, traitement, manipulation, utilisation, mesure, contrôle, analyse, ou autre...

Dans le cas d'une ligne opératoire, il peut être prévu une première enceinte comportant une paroi pourvue d'une même pluralité de premières ouvertures et de premières portes, ainsi que de dispositifs de jonction étanche avec une multiplicité de secondes enceintes.

Dans le cas de la réalisation connue sous la marque BIOSAFE®, les moyens porteurs et les moyens de manoeuvre de déplacement de la première porte et de son vantail comprennent une charnière dont l'axe - vertical et latéral - est situé dans la première enceinte elle-même (l'espace intérieur de cette première enceinte), dans ou à proximité de la face intérieure de sa paroi, à proximité de son ouverture et de sa bride, la rotation autour de la charnière étant réalisé de façon manuelle ou motorisée (vérin, moteur...). À l'état fermé, le premier vantail est effacé dans ou au voisinage du plan de la première paroi, de la première ouverture et de la première bride. À l'état ouvert, le premier vantail, qui est destiné à porter alors le second vantail, est saillant, dans la première enceinte, notamment disposé plus ou moins perpendiculairement au plan de la première paroi, de la première ouverture et de la première bride. Le déplacement du vantail entre son état fermé et son état ouvert (et inversement) est de l'ordre d'un tiers de tour. Quant aux moyens de manoeuvre de déplacement, tels que vérin, moteur..., ils sont aptes à déplacer le premier vantail à rotation sur cette course.

Dans les réalisations décrites dans le document EP-A-2091051 où l'axe est également vertical et latéral, dans les documents EP-A-1 141 974, EP-A-1 454 328, EP-A-0 730 907, EP-A-0 830 896 où l'axe est horizontal inférieur (en dessous de l'ouverture et de la bride) et dans le document EP-A-0 662 373, où l'axe est horizontal supérieur, à l'état ouvert, le premier vantail, qui porte alors le second vantail, est comme précédemment saillant dans la première enceinte et plus ou moins perpendiculaire au plan de la première paroi, de la première ouverture et de la première bride.

Comme le rappelle le document EP-A-1141672, l'homme du métier sait qu'avec le type de dispositif de transfert aseptique considéré, il existe ce que l'on appelle une « ligne critique » à contamination résiduelle par le milieu extérieur aux deux enceintes. Il est possible que cette ligne vienne au contact du milieu extérieur se trouvant dans le passage entre les deux enceintes ou au contact du contenu traversant ce passage pour être transférés d'une enceinte à l'autre, avec pour conséquence, une contamination. Cette ligne critique est parfois appelée « zone critique » ou « ring of concern » (voir PIC/S - Pharmaceutical Inspection Convention - RECOMMENDATION - ISOLATORS USED FOR ASEPTIC PROCESSING AND STERILITY TESTING*).*

Plus précisément, il existe deux lignes critiques, sensiblement concentriques lorsque les deux portes sont à l'état fermé.

Une ligne critique intérieure se trouve sur la face extérieure de la première porte, plus précisément de son vantail, en contact avec le milieu extérieur et non recouverte par la face extérieure de la seconde porte, plus précisément de son vantail, lorsque les deux vantaux sont plaqués l'un contre l'autre.

Une ligne critique extérieure se trouve sur la face extérieure de la seconde bride en contact avec le milieu extérieur et non recouverte par la face extérieure de la première bride, lorsque les deux brides sont plaquées l'une contre l'autre.

Dans les réalisations précédemment citées, à l'état ouvert du premier vantail, le premier vantail portant le second vantail est adjacent latéralement à la limite latérale de l'espace d'entrée/sortie de la première enceinte. De ce fait, le premier vantail et/ou le second vantail peut se trouver être mis en contact avec le certain contenu lors de son passage dans l'espace d'entrée/sortie, avec des risques de contamination par la ligne critique intérieure.

Il a été proposé plusieurs solutions en vue de pallier ce risque de contamination, également mentionné dans ISOLATION TECHNOLOGY - A PRACTICAL GUIDE -, publié chez CRC Press en 2004.

Le document EP-A-0960698 prévoit des moyens de décontamination utilisant des rayonnements ultraviolets, ultraviolets puisés, ou de lumière puisés.

Le document EP-A-0662373 prévoit qu'un anneau à bride du dispositif de transfert aseptique comprend un élément annulaire résistif de chauffage qui vise à maintenir une intégrité maximale du dispositif contre une possible contamination. Des variantes de la technologie par chauffage sont décrites dans les documents EP-A-730907 et EP-A-830907. La technologie de stérilisation par chaleur sèche a été indiquée comme étant la solution préférée selon la présentation faite par le Barrier Users Group Symposium (BUGS) à la conférence des 17 et 18 janvier 1995.

Le document EP-A-1454328 décrit un dispositif de transfert aseptique qui comporte un dispositif de protection de la seule ligne critique extérieure. Ce dispositif de protection comprend une pièce annulaire et un bras de support. La pièce annulaire comprend une portion tronconique et une portion circulaire. La portion tronconique est dimensionnée de manière à pouvoir, lorsque le premier vantail de la première porte est à l'état ouvert, être engagée au travers du siège délimité par la bride de la première enceinte, de manière à recouvrir les zones de la bride formant ce siège, tandis que la portion circulaire est conformée, quant à elle, de manière à venir en appui contre la face de la bride tournée vers l'intérieur de la première enceinte, afin de positionner axialement la portion tronconique par rapport à la bride, en recouvrement et sans contact. A cet effet, le bras est monté pivotant sur une paroi de la première enceinte. Un tel dispositif de protection est monté à l'intérieur de la première enceinte et il est structurellement indépendant de la première porte et non intégré à elle. Cette réalisation est donc complexe et encombrante, outre qu'elle implique de devoir agir sur le bras de support placé dans la première enceinte. Enfin, cette réalisation n'apporte aucune solution en ce qui concerne la ligne critique intérieure.

S'agissant de la ligne critique extérieure, on a également proposé de prévoir une trompe souple portée par la seconde enceinte, dépliée après que la seconde enceinte est amenée à l'état ouvert ou une trompe rigide mise en place après ouverture ou encore une goulotte amovible. Ces solutions ne sont que des palliatifs. La technologie utilisant une trompe pose plusieurs problèmes : risque d'oubli de mise en place ou défaut de positionnement de la trompe lors de la fabrication de la seconde enceinte, défaut lors de l'utilisation, risque de contamination lors de la mise en place d'une trompe souple... La technologie utilisant une goulotte pose d'autres problèmes: encombrement dans la première enceinte, risque de particules... Qu'il s'agisse d'une trompe ou d'une goulotte, un tel organe est rapporté sur la première porte, étant structurellement indépendant d'elle et non intégré à elle.

L'état de la technique comprend également les documents US 3489298, EP 0586307, FR2833745, EP 0830 896, FR 2787 235, US 2009/212054, WO 96/21615, WO 03/041087 et WO 95/34078. Toutefois, aucun de ces documents ne prévoit un agencement tel qu'il y ait une séparation entre l'espace de communication et tant la ligne critique annulaire intérieure que la ligne critique annulaire extérieure.

Le problème à la base de l'invention est donc de pourvoir un dispositif de jonction étanche entre deux enceintes isolées d'un milieu extérieur qui soit intégralement protégé contre les risques de contamination tant pour la ligne critique extérieure que pour la ligne critique intérieure, et qui ne présente pas les inconvénients ou les limites des solutions partielles proposées jusqu'ici.

À cet effet, et selon un premier aspect, l'invention a pour objet un dispositif de jonction étanche entre une première enceinte et une seconde enceinte isolées du milieu extérieur, tel que :
▪ faisant partie d'une première enceinte :
   ∘ une structure incluant une première paroi limitant un premier espace intérieur est pourvue d'une première ouverture limitée par une première bride annulaire;
   ∘ une première porte supportée par la structure par l'intermédiaire de moyens porteurs mobiles ou déformables, dont le vantail est agencé et monté de façon apte à pouvoir être déplacé pour se trouver soit à l'état fermé où il coopère avec la première bride en fermant la première ouverture soit à l'état ouvert où il est dégagé de la première bride et placé dans l'espace intérieur en ouvrant la première ouverture;
▪ faisant partie d'une seconde enceinte :
   ∘ une seconde paroi est pourvue d'une seconde ouverture limitée par une seconde bride annulaire;
   ∘ une seconde porte dont le vantail est agencé et monté à déplacement, apte à se trouver à l'état fermé ou à l'état ouvert où, respectivement, le second vantail ferme ou ouvre la seconde ouverture;
▪ la première bride et la seconde bride sont complémentaires et aptes à être maintenues de façon amovible plaquées l'une contre l'autre par leurs faces extérieures par des moyens de maintien amovible ;
▪ le premier vantail et le second vantail sont complémentaires et aptes à être plaqués l'un contre l'autre de façon hermétique par leurs faces extérieures ;
▪ des moyens de solidarisation amovible sont aptes à maintenir les deux vantaux de façon amovible plaqués l'un contre l'autre de façon hermétique par leurs faces extérieures;
▪ des moyens de manoeuvre de déplacement sont aptes à déplacer le premier vantail entre ses états fermé et ouvert, et des moyens de commande sont aptes à commander les moyens de manoeuvre de déplacement;
▪ de telle sorte que lorsque la première porte et la seconde porte, respectivement leurs vantaux, sont à l'état ouvert, la première enceinte et la seconde enceinte communiquent entre elles par leurs ouvertures respectives à l'état ouvert, un espace de communication constitué d'un espace d'entrée/sortie dans la première enceinte et d'un espace d'entrée/sortie dans la seconde enceinte étant ménagé entre les deux enceintes permettant de faire passer de l'une à l'autre un certain contenu ;
▪ une ligne critique annulaire intérieure de risque de contamination existe sur le premier vantail de la première porte et une ligne critique annulaire extérieure de risque de contamination existe sur la seconde bride;
▪ et des moyens de protection prévus contre les risques de contamination pour la ligne critique extérieure.

Ce dispositif comporte des moyens structurellement intégrés à la première porte et des moyens structurellement intégrés à la seconde bride, aptes - lorsque la première porte et la seconde porte, respectivement leurs vantaux, sont à l'état ouvert - à former une séparation entre l'espace de communication et la ligne critique annulaire intérieure et la ligne critique annulaire extérieure..

Selon une autre caractéristique, les moyens structurellement intégrés aptes à former une séparation constituent des moyens de protection contre toute contamination à l'endroit de la ligne critique annulaire intérieure et/ou la ligne critique annulaire extérieure.

Selon une réalisation, les moyens structurellement intégrés sont en totalité intégrés à la première porte et/ou à la seconde bride.

Les moyens structurellement intégrés aptes à former une séparation se présentent sous la forme d'un déflecteur annulaire placé entre l'espace de communication et la ligne critique, cette dernière étant ainsi normalement non atteignable lors du passage dans l'espace de communication.

Selon les cas, l'une ou l'autre ou les deux réalisations existent.

Selon une première variante de réalisation, les moyens structurellement intégrés aptes à former une séparation se présentent sous la forme d'un déflecteur annulaire intégré à la seconde bride, limitant la seconde ouverture, saillant du plan frontal libre de la seconde bride formant interface avec la première bride.

Selon une possibilité, le déflecteur annulaire a une forme générale cylindrique ou avec un bord distal libre légèrement évasé ou forme avec la partie périphérique extérieure de la seconde bride une cavité annulaire dans le fond ou au voisinage du fond de laquelle se trouve la ligne critique.

Selon une possibilité, le vantail de la seconde porte comprend une rainure annulaire s'ouvrant vers l'intérieur de la seconde enceinte, apte à recevoir le déflecteur de la seconde bride, par exemple, apte à comprendre vers l'intérieur la rainure annulaire et à former vers l'extérieur une partie en forme de tenon apte à être logée dans une partie complémentaire en forme de mortaise ménagée sur la face extérieure du vantail de la première porte.

Selon une deuxième variante de réalisation, les moyens structurellement intégrés aptes à former une séparation se présentent sous la forme d'un déflecteur annulaire intégré à la première porte, porté par ou faisant partie des moyens porteurs ou des moyens de manoeuvre de déplacement de la première porte ou du vantail de la première porte à l'état ouvert et disposé autour de la première porte.

Selon plusieurs possibilités, le déflecteur annulaire a une forme générale cylindrique et forme avec une partie centrale des moyens porteurs ou des moyens de manoeuvre de déplacement de la première porte, une cavité de protection de la ligne critique intérieure de dimension axiale supérieure, notamment nettement supérieure, à l'encombrement axial du vantail de la première porte ou à l'encombrement axial de l'ensemble comprenant le vantail de la première porte et le vantail de la seconde porte plaqué sur le vantail de la première porte.

Selon une possibilité, les moyens porteurs et les moyens de manoeuvre de déplacement de la première porte sont des moyens à rotation autour d'un axe au moins sensiblement parallèle à la première ouverture et à la première bride. Cet axe est par exemple écarté dans l'espace intérieur de la première enceinte, de manière à permettre au déflecteur - à l'état ouvert du premier vantail - d'être placé entre la partie centrale des moyens porteurs ou des moyens de manoeuvre de déplacement et la face intérieure de la paroi de la première enceinte autour de la première ouverture. Ou cet axe est écarté latéralement du vantail de la première porte, de manière à espacer le déflecteur, le vantail de la première porte et la ligne critique intérieure de l'espace de communication lorsque le premier vantail est à l'état ouvert.

Selon une troisième variante de réalisation, les moyens structurellement intégrés aptes à former une séparation se présentent sous la forme d'un espace d'écartement de taille appropriée, les moyens porteurs et les moyens de manoeuvre de déplacement de la première porte étant agencés de manière qu'à l'état ouvert du premier vantail, le premier vantail soit substantiellement espacé au-delà de la limite du premier espace d'entrée/sortie, l'espace d'écartement étant ainsi ménagé entre le premier espace d'entrée/sortie et le premier vantail à l'état ouvert.

Selon différentes possibilités, la première porte est supportée par l'intermédiaire de moyens porteurs de sorte que le premier vantail est agencé et monté de façon apte à pouvoir être déplacé pour se trouver, à l'état ouvert, soit dans un état ouvert primaire où est ménagé un espace d'écartement primaire soit dans un état ouvert final où est ménagé un espace d'écartement final, plus grand que l'espace d'écartement primaire.

Selon les cas, l'espace d'écartement est situé au-delà de la limite latérale ou au-delà de la limite d'extrémité distale de l'espace d'entrée/sortie de la première enceinte, opposée à la première ouverture et à la première bride.

Selon une possibilité, l'espace d'écartement est un espace vide. Selon une autre possibilité, il est prévu pour la première enceinte une paroi de séparation fixe ou mobile qui, à l'état ouvert du premier vantail, est placée et s'étend, au moins pour partie, entre le premier vantail et le premier espace d'entrée/sortie.

Selon les possibilités, à l'état ouvert du premier vantail, l'écartement entre toute zone du premier vantail et la limite la plus proche du premier espace d'entrée/sortie est au moins égal au quart, plus particulièrement est au moins égal à la moitié, plus particulièrement encore est au moins égal à la taille du premier espace d'entrée/sortie comptée selon la direction de cet écartement.

Selon les possibilités, à l'état ouvert du premier vantail, le premier vantail est disposé dans une position au moins sensiblement parallèle ou au moins sensiblement orthogonale à la première ouverture, à la première bride et à la position du premier vantail à l'état fermé.

Selon les possibilités, à l'état ouvert du premier vantail, le premier vantail est disposé dans une position au moins sensiblement en regard ou dans une position latérale par rapport à la première ouverture, à la première bride et à la position du premier vantail à l'état fermé.

Selon les possibilités, les moyens porteurs et les moyens de manoeuvre de déplacement de la première porte sont agencés pour être aptes à déplacer le premier vantail entre ses états fermé et ouvert ou ouvert primaire, selon un mouvement comprenant un mouvement initial d'écartement du premier vantail de la première bride qui est un mouvement au moins sensiblement de translation initiale le long d'un axe au moins sensiblement orthogonal à la première ouverture, à la première bride et à la position du premier vantail à l'état fermé, ou un mouvement de rotation initiale autour d'un axe au moins sensiblement parallèle à la première ouverture, à la première bride et à la position du premier vantail à l'état fermé.

Selon les possibilités, les moyens porteurs et les moyens de manoeuvre de déplacement de la première porte sont agencés pour être aptes à déplacer le premier vantail entre ses états fermé et ouvert ou ouvert primaire et ouvert final, selon un mouvement comprenant un mouvement initial d'écartement du premier vantail de la première bride et au moins un mouvement ultérieur qui est un mouvement ultérieur de translation et/ou au moins un mouvement ultérieur de rotation.

Selon les possibilités, les moyens porteurs et les moyens de manoeuvre de déplacement de la première porte sont agencés pour être aptes à déplacer le premier vantail selon un mouvement ultérieur de translation le long d'un axe de translation au moins sensiblement rectiligne ou curviligne, ou selon un mouvement ultérieur de rotation autour d'un axe au moins sensiblement parallèle à ou au moins sensiblement orthogonal à la première ouverture, à la première bride et à la position du premier vantail à l'état fermé.

Selon une première famille de réalisations, les moyens porteurs et les moyens de manoeuvre de déplacement de la première porte sont agencés pour être aptes à déplacer le premier vantail à partir de son état fermé selon un mouvement comprenant un mouvement initial de translation le long d'un axe au moins sensiblement orthogonal à la première ouverture, à la première bride et à la position du premier vantail à l'état fermé, pour écarter le premier vantail de la première bride, et au moins un mouvement ultérieur de translation le long d'un axe au moins sensiblement parallèle à la première ouverture, à la première bride et à la position du premier vantail à l'état fermé et/ou un mouvement de rotation autour d'un axe au moins sensiblement orthogonal à la première ouverture, à la première bride et à la position du premier vantail à l'état fermé, pour amener le premier vantail dans sa position à l'état ouvert ou ouvert primaire ou ouvert final où il est alors disposé dans une position latérale par rapport à la première ouverture, à la première bride et à la position du premier vantail à l'état fermé, au moins sensiblement orthogonalement à l'axe du premier espace d'entrée/sortie, l'espace d'écartement étant situé au-delà de la limite latérale du premier espace d'entrée/sortie.

Selon une deuxième famille de réalisations, les moyens porteurs et les moyens de manoeuvre de déplacement de la première porte sont agencés pour être aptes à déplacer le premier vantail à partir de son état fermé selon un mouvement comprenant au moins un mouvement de translation le long d'un axe au moins sensiblement orthogonal à la première ouverture, à la première bride et à la position du premier vantail à l'état fermé, pour écarter le premier vantail de la première bride, puis amener le premier vantail dans sa position à l'état ouvert, ouvert primaire, ouvert final, où il est alors disposé dans une position au moins sensiblement en regard de la première ouverture, de la première bride et de la position du premier vantail à l'état fermé, au moins sensiblement orthogonalement à l'axe du premier espace d'entrée/sortie, l'espace d'écartement étant situé au-delà de la limite d'extrémité de l'espace d'entrée/sortie opposée à la première ouverture et à la première bride.

Selon une troisième famille de réalisations, les moyens porteurs et les moyens de manoeuvre de déplacement de la première porte sont agencés pour être aptes à déplacer le premier vantail à partir de son état fermé selon un mouvement comprenant un mouvement de rotation autour d'un axe au moins sensiblement parallèle à la première ouverture, à la première bride et à la position du premier vantail à l'état fermé, pour amener le premier vantail dans sa position à l'état ouvert ou ouvert primaire ou ouvert final où il est alors disposé dans une position latérale par rapport à la première ouverture, à la première bride et à la position du premier vantail à l'état fermé, au moins sensiblement orthogonalement à l'axe du premier espace d'entrée/sortie, l'espace d'écartement étant situé au-delà de la limite latérale du premier espace d'entrée/sortie.

Selon une quatrième famille de réalisations, les moyens porteurs et les moyens de manoeuvre de déplacement de la première porte sont agencés pour être aptes à déplacer le premier vantail à partir de son état fermé selon un mouvement comprenant un mouvement de translation le long d'un axe curviligne correspondant au moins sensiblement à un arc de cercle d'axe au moins sensiblement parallèle à la première ouverture, à la première bride et à la position du premier vantail à l'état fermé, pour amener le premier vantail dans sa position à l'état ouvert ou ouvert primaire ou ouvert final où il est alors disposé dans une position latérale par rapport à la première ouverture, à la première bride et à la position du premier vantail à l'état fermé, au moins sensiblement orthogonalement à l'axe du premier espace d'entrée/sortie, l'espace d'écartement étant situé au-delà de la limite latérale du premier espace d'entrée/sortie.

Selon un deuxième aspect, l'invention a pour objet un procédé de mise en oeuvre d'un dispositif de jonction étanche tel qu'il vient d'être décrit, comportant les étapes opératoires successives suivantes :
▪ on dispose d'une première enceinte dont la première porte comportant un premier vantail est à l'état fermé et d'une seconde enceinte dont la seconde porte comportant un second vantail est à l'état fermé ;
▪ on amène les deux enceintes à se trouver à proximité l'une de l'autre et on plaque la première bride et la seconde bride l'une contre l'autre de façon hermétique par leurs faces extérieures et on amène le premier vantail de la première porte et le second vantail de la seconde porte à être plaqués l'une contre l'autre de façon hermétique ;
▪ on solidarise la première bride et la seconde bride et les deux vantaux et on manoeuvre le premier vantail pour le déplacer et l'amener à l'état ouvert et ainsi amener également le second vantail à l'état ouvert, de telle sorte que la première enceinte et la seconde enceinte communiquent entre elles par leurs ouvertures respectives à l'état ouvert, un espace de communication étant ménagé entre les deux enceintes permettant de faire passer entre elles un certain contenu.

Ce procédé est tel que lorsque le premier vantail de la première porte et le second vantail de la seconde porte sont à l'état ouvert, on met en oeuvre les moyens structurellement intégrés à la première porte et/ou des moyens structurellement intégrés à la seconde bride et on forme une séparation entre l'espace de communication et la ligne critique annulaire intérieure et la ligne critique annulaire extérieure du dispositif de jonction étanche.

Selon un troisième aspect, l'invention a pour objet une première enceinte, spécialement destinée à faire partie avec une seconde enceinte d'un dispositif de transfert étanche entre les deux enceintes, comportant :
▪ une structure incluant une première paroi fermée limitant un espace intérieur,
▪ au moins une première ouverture ménagée dans la première paroi et limitée par une première bride annulaire dont la face extérieure est apte à assurer le plaquage hermétique sur elle-même de la face extérieure d'une seconde bride complémentaire appartenant à la seconde enceinte,
▪ des moyens de maintien amovible, associés au moins pour partie à la première bride, aptes à maintenir de façon amovible la première bride et la seconde bride plaquées l'une contre l'autre par leurs faces extérieures,
▪ une première porte supportée par la structure par l'intermédiaire de moyens porteurs mobiles ou déformables, dont le premier vantail est agencé et monté de façon apte à pouvoir être déplacé pour se trouver soit à l'état fermé où il coopère avec la première bride en fermant la première ouverture soit à l'état ouvert où il est dégagé de la première bride et placé dans le premier espace intérieur en ouvrant la première ouverture, et dont la face extérieure est apte à assurer le plaquage hermétique sur elle-même de la face extérieure du second vantail d'une seconde porte complémentaire appartenant à la seconde enceinte,
▪ des moyens de solidarisation amovible associés au moins pour partie à la première porte, aptes à maintenir de façon amovible le premier vantail et le second vantail plaqués l'un contre l'autre par leurs faces extérieures,
▪ des moyens de manoeuvre de déplacement aptes à déplacer le premier vantail entre ses états fermé et ouvert, et des moyens de commande de ces moyens de manoeuvre de déplacement,
▪ et, lorsque le premier vantail est à l'état ouvert, un premier espace d'entrée/sortie dans le/du premier espace intérieur, en forme générale de tronc de cylindre, de cône ou de pyramide, s'étendant dans le premier espace intérieur au moins sensiblement axialement à partir de la première ouverture et de la première bride, ce premier espace d'entrée/sortie faisant partie d'un espace de communication entre les deux enceintes associées et étant apte à permettre de faire passer un certain contenu dans/hors du premier espace intérieur, de l'une à l'autre des deux enceintes,
▪ apte à être joint à la seconde enceinte par un dispositif de jonction étanche tel qu'il a été décrit,
▪ et comportant des moyens structurellement intégrés à la première porte aptes lorsqu'elle est à l'état ouvert à former une séparation entre l'espace de communication et la ligne critique annulaire intérieure.

Les moyens structurellement intégrés à la première porte se présentent sous la forme d'un déflecteur annulaire porté par ou faisant partie des moyens porteurs de la première porte ou du premier vantail de la première porte à l'état ouvert et disposé autour de la première porte.

Dans cette première réalisation, le déflecteur peut être de dimension axiale supérieure, notamment nettement supérieur, à l'encombrement axial du premier vantail et former avec une partie centrale des moyens porteurs de la première porte, une cavité de protection de la ligne critique intérieure.

Dans cette première réalisation, les moyens porteurs de la première porte peuvent être des moyens porteurs à rotation autour d'un axe sensiblement parallèle à la première bride. Par exemple, cet axe de rotation est écarté de la première bride vers l'intérieur de la première enceinte, de manière à permettre au déflecteur d'être placé entre la partie centrale des moyens porteurs et la face intérieure de la paroi de la première enceinte, autour de la première ouverture. Cet axe de rotation peut être écarté latéralement du premier vantail, de manière à espacer le déflecteur, le premier vantail et la ligne critique intérieure de l'espace de communication lorsque la première porte est à l'état ouvert.

Selon les modes d'exécution de cette seconde réalisation, les moyens porteurs et les moyens de manoeuvre de déplacement de la première porte comprennent des moyens d'écartement initial du premier vantail de la première bride qui sont des moyens de translation le long d'un axe au moins sensiblement orthogonal à la première ouverture, à la première bride et à la position du premier vantail à l'état fermé, ou des moyens de rotation autour d'un axe au moins sensiblement parallèle à la première ouverture, à la première bride et à la position du premier vantail à l'état fermé. Ou, les moyens porteurs et les moyens de manoeuvre de déplacement comprennent des moyens d'écartement initial du premier vantail de la première bride et des moyens de déplacement ultérieur qui sont des moyens de translation et/ou des moyens de rotation.

Par exemple, les moyens porteurs et les moyens de manoeuvre de déplacement comprennent des moyens de déplacement ultérieur de translation le long d'un axe de translation au moins sensiblement rectiligne ou curviligne ou des moyens de rotation ultérieure autour d'un axe au moins sensiblement parallèle à ou au moins sensiblement orthogonal à la première ouverture, à la première bride et à la position du premier vantail à l'état fermé.

Selon une possibilité, le premier vantail est prolongé latéralement en saillie, de façon au moins sensiblement coplanaire, par au moins une platine faisant partie des moyens porteurs et permettant le déplacement du premier vantail par suite de la mise en oeuvre des moyens de manoeuvre de déplacement.

Selon une possibilité, la première paroi comporte une ou plusieurs lumières traversantes aptes au passage étanche et aseptique des moyens porteurs et/ou des moyens de manoeuvre de déplacement.

Dans la seconde réalisation (espace d'écartement) et selon une première famille, les moyens porteurs et les moyens de manoeuvre de déplacement comprennent au moins un premier vérin disposé selon un axe au moins sensiblement orthogonal à la première ouverture, à la première bride et à la position du premier vantail à l'état fermé et assurant le mouvement initial de translation et soit au moins un second vérin selon un axe au moins sensiblement parallèle à la première ouverture, à la première bride et à la position du premier vantail à l'état fermé, soit au moins un système de déplacement à rotation selon un axe au moins sensiblement orthogonal à la première ouverture, à la première bride et à la position du premier vantail à l'état fermé.

Selon les possibilités de réalisation de cette première famille, la course de mouvement initial de translation est celle juste nécessaire, aux jeux nécessaires près, pour permettre le mouvement ultérieur de translation ou de rotation, sans que le premier vantail n'interfère avec la première paroi de la première enceinte sur sa face intérieure. Dans son état ouvert ou ouvert primaire ou ouvert final, la face extérieure du premier vantail est tournée vers et proche de la face intérieure de la première paroi de la première enceinte. Le premier vantail est prolongé latéralement en saillie par au moins une platine portée au moins sensiblement orthogonalement par le au moins un premier vérin traversant la au moins une lumière traversante de la première paroi, le au moins un premier vérin étant porté par le au moins un second vérin ou le au moins un système de déplacement à rotation.

Dans la seconde réalisation (espace d'écartement) et selon une deuxième famille, les moyens porteurs et les moyens de manoeuvre de déplacement comprennent au moins un vérin disposé selon un axe au moins sensiblement orthogonal à la première ouverture, à la première bride et à la position du premier vantail à l'état fermé,
Selon les possibilités de réalisation de cette deuxième famille, la course de mouvement de translation est celle nécessaire à la réalisation de l'espace d'écartement et, dans son état ouvert ou ouvert primaire ou ouvert final, la face extérieure du premier vantail est tournée vers et éloignée de la première ouverture et de la première bride.

Dans la seconde réalisation (espace d'écartement) et selon une troisième famille, les moyens porteurs et les moyens de manoeuvre de déplacement comprennent au moins un système de déplacement à rotation selon un axe au moins sensiblement parallèle à la première bride et à la position du premier vantail à l'état fermé.

Selon les possibilités de réalisation de cette troisième famille, la course de mouvement de rotation est voisine d'un demi-tour, dans son état ouvert ou ouvert primaire ou ouvert final, la face extérieure du premier vantail est tournée vers l'opposé de la face intérieure de la première paroi de la première enceinte, et le premier vantail est prolongé latéralement en saillie par une platine portée par le système de déplacement à rotation.

Dans la seconde réalisation et selon une quatrième famille, les moyens porteurs et les moyens de manoeuvre de déplacement comprennent au moins un système à parallélogramme déformable selon un axe au moins sensiblement parallèle à la première bride et à la position du premier vantail à l'état fermé.

Selon les possibilités de réalisation de cette quatrième famille, la course de mouvement de rotation du parallélogramme déformable est de l'ordre d'un demi-tour et, dans son état ouvert ou ouvert primaire ou ouvert final, la face extérieure du premier vantail est tournée vers la face intérieure de la première paroi de la première enceinte.

Selon un quatrième aspect, l'invention a pour objet une seconde enceinte, spécialement destinée à faire partie avec une première enceinte d'un dispositif de transfert étanche entre les deux enceintes,
▪ comportant :
   ∘ une seconde paroi pourvue d'une seconde ouverture limitée par une seconde bride annulaire,
   ∘ une seconde porte dont le vantail est agencé et monté à déplacement, apte à se trouver à l'état fermé ou à l'état ouvert où, respectivement, le second vantail ferme ou ouvre la seconde ouverture,
▪ apte à être joint à la première enceinte par un dispositif de jonction étanche tel qu'il a été décrit précédemment,
▪ et comportant des moyens structurellement intégrés à la seconde bride aptes lorsque la seconde porte, respectivement le second vantail, est à l'état ouvert à former une séparation entre l'espace de communication et la ligne critique annulaire extérieure.

Les moyens structurellement intégrés à la seconde bride se présentent sous la forme d'un déflecteur annulaire limitant la seconde ouverture, saillant du plan frontal libre de la seconde bride formant interface avec la première bride.

Selon les réalisations, le déflecteur annulaire a une forme générale cylindrique ou avec un bord distal libre légèrement évasé et il forme avec la partie périphérique extérieure de la seconde bride une cavité annulaire dans le fond ou au voisinage du fond de laquelle se trouve la ligne critique extérieure. Selon les réalisations, le vantail de la seconde porte comprend une rainure annulaire s'ouvrant vers l'intérieur de la seconde enceinte, apte à recevoir le déflecteur de la seconde bride et le vantail de la seconde porte comprend une partie périphérique annulaire renflée apte à comprendre vers l'intérieur la rainure annulaire et à former vers l'extérieur une partie en forme de tenon.

Selon un cinquième aspect, l'invention a pour objet un dispositif de transfert étanche entre une première enceinte telle qu'elle a été décrite et une seconde enceinte telle qu'elle a été décrite, comportant un dispositif de jonction étanche entre les deux enceintes pourvu de moyens structurellement intégrés à la première porte et/ou des moyens structurellement intégrés à la seconde bride, aptes - lorsque la première porte et la seconde porte, respectivement les vantaux des portes, sont à l'état ouvert - à former une séparation entre l'espace de communication et la ligne critique annulaire intérieure et/ou la ligne critique annulaire extérieure.

Selon un sixième aspect, l'invention a pour objet un procédé de mise en oeuvre d'un dispositif de transfert étanche entre une première enceinte et une seconde enceinte comprenant un dispositif de jonction étanche, tel qu'il a été décrit, qui comporte les étapes opératoires successives suivantes :
▪ on dispose d'une première enceinte dont la première porte, respectivement le premier vantail, est à l'état fermé et d'une seconde enceinte dont la seconde porte, respectivement le second vantail, est à l'état fermé, l'une des enceintes contenant originellement un certain contenu ;
▪ on met en oeuvre le dispositif de jonction étanche tel qu'il a été décrit ;
▪ une fois que la première porte et la seconde porte, respectivement les vantaux, sont à l'état ouvert et que la première enceinte et la seconde enceinte communiquent entre elles par un espace de communication, on fait passer le certain contenu de l'enceinte où il se trouvait à l'autre enceinte, sans que le certain contenu, lors de ce transfert entre les deux enceintes, ne soit en contact avec la ligne critique annulaire intérieure et/ou la ligne critique annulaire extérieure;
▪ une fois ce transfert effectué, on amène la première porte et la seconde porte, respectivement les vantaux, à l'état fermé ;
▪ puis on dissocie les deux enceintes.

Selon les réalisations, le certain contenu se trouve originellement dans la première enceinte ou il se trouve originellement dans la seconde enceinte.

On décrit maintenant plusieurs modes de réalisation de l'invention à l'aide des dessins, dans lesquels :

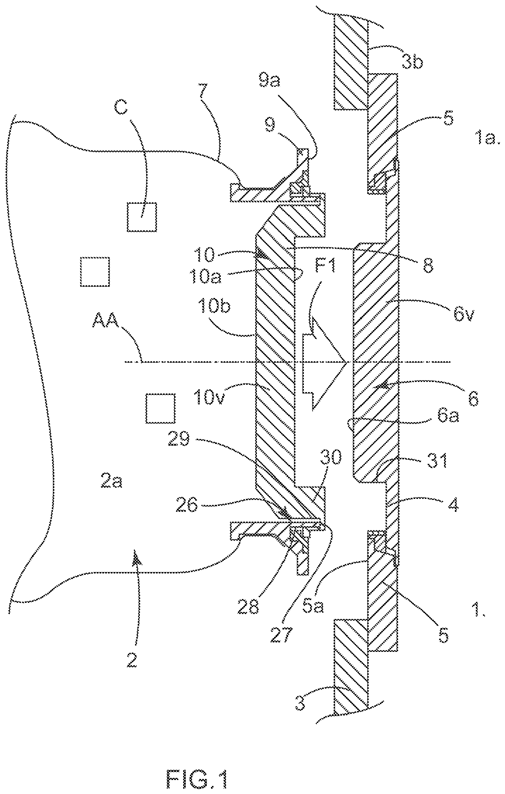

- La figure 1 est une vue en coupe par un plan axial d'un dispositif de jonction étanche entre une première enceinte et une seconde enceinte représentées partiellement, alors que les deux enceintes sont à proximité l'une de l'autre mais non encore plaquées, les vantaux des deux portes des deux enceintes étant à l'état fermé, le dispositif de jonction étanche comportant dans cette réalisation des moyens structurellement intégrés à la seconde bride et en forme de déflecteur, aptes - lorsque la première porte et la seconde porte sont à l'état ouvert - à former une séparation entre l'espace de communication et la ligne critique annulaire extérieure.

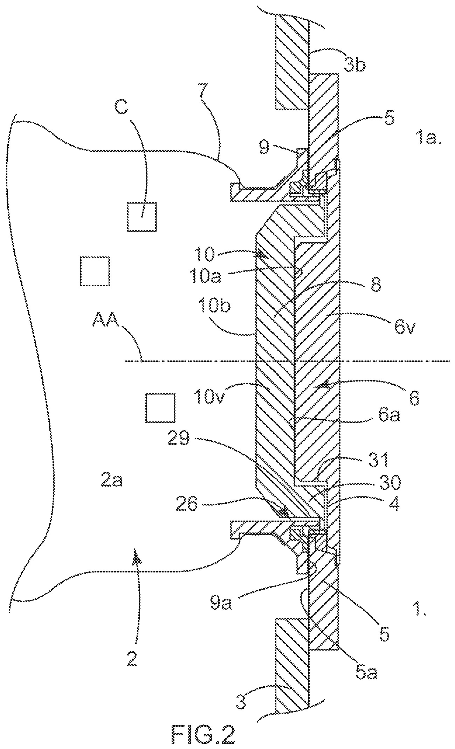

- La figure 2 est une vue analogue à celle de la figure 1, alors que les deux brides et les vantaux des deux portes des deux enceintes sont appliqués l'un sur l'autre, les portes des deux enceintes étant à l'état fermé.

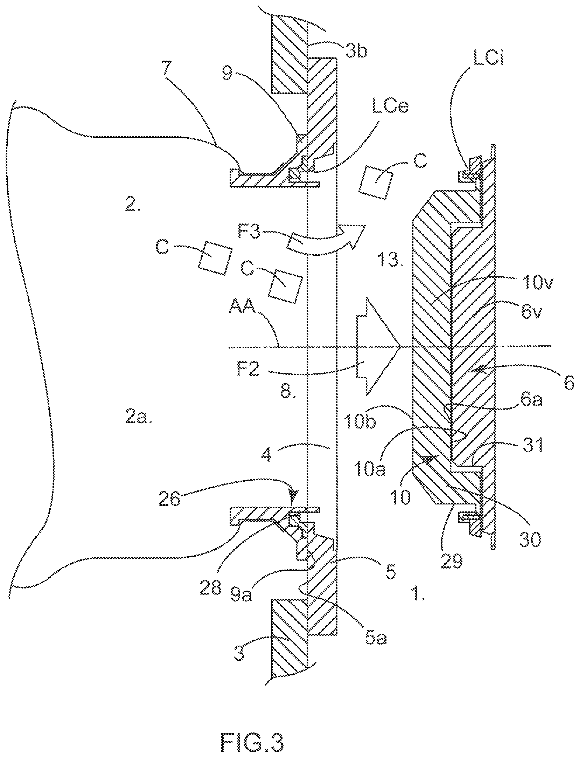

- La figure 3 est une vue analogue à celle de la figure 2, alors que les deux portes sont à l'état ouvert, mais non complètement.

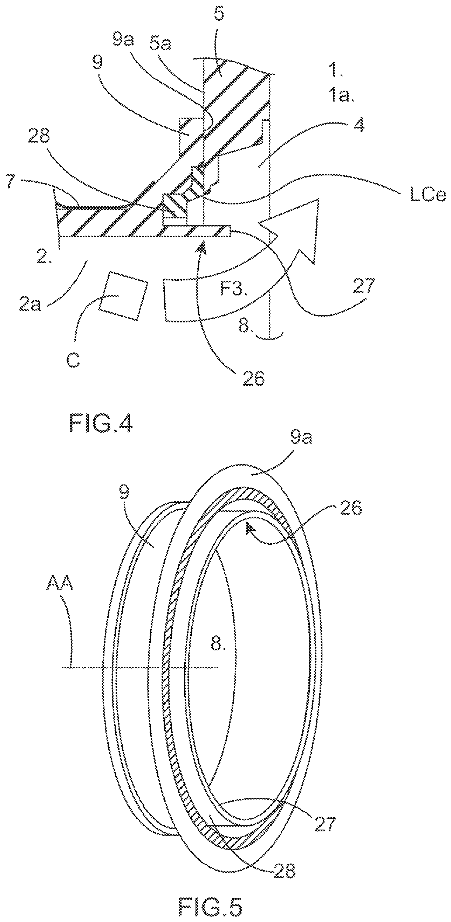

- La figure 4 est une vue partielle et à plus grande échelle de la figure 3, montrant la séparation entre l'espace de communication et la ligne critique annulaire extérieure.
- La figure 5 est une vue en perspective partielle de la réalisation représentée sur les figures 1 à 4.

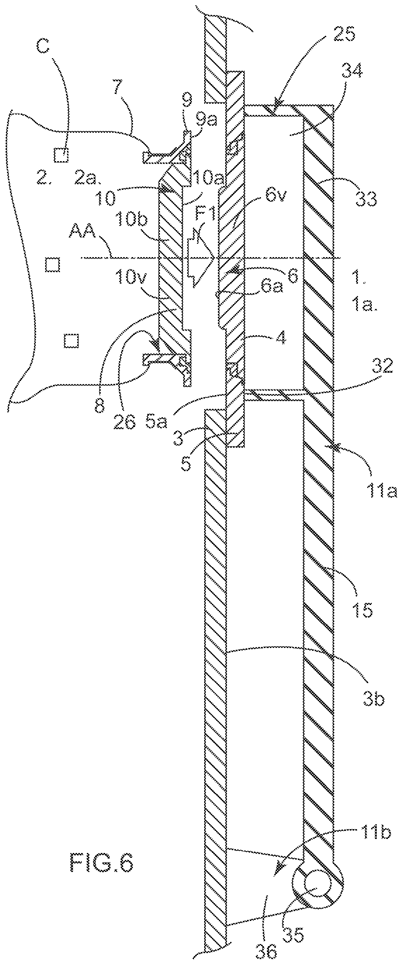

- La figure 6 est une vue en coupe par un plan axial d'un dispositif de jonction étanche entre une première enceinte et une seconde enceinte représentées partiellement, alors que les deux enceintes sont à proximité l'une de l'autre mais non encore plaquées, les vantaux des deux portes des deux enceintes étant à l'état fermé, le dispositif de jonction étanche comportant dans cette autre réalisation des moyens structurellement intégrés à la première porte et en forme de déflecteur, aptes - lorsque la première porte et la seconde porte sont à l'état ouvert - à former une séparation entre l'espace de communication et les lignes critiques.

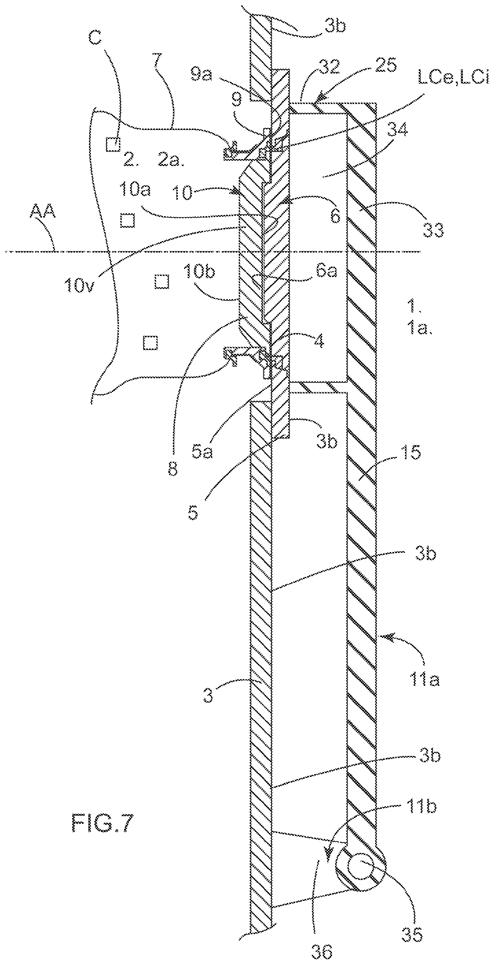

- La figure 7 est une vue analogue à celle de la figure 6, alors que les deux brides et les vantaux des deux portes des deux enceintes sont appliqués l'un sur l'autre, les vantaux des deux portes des deux enceintes étant à l'état fermé.

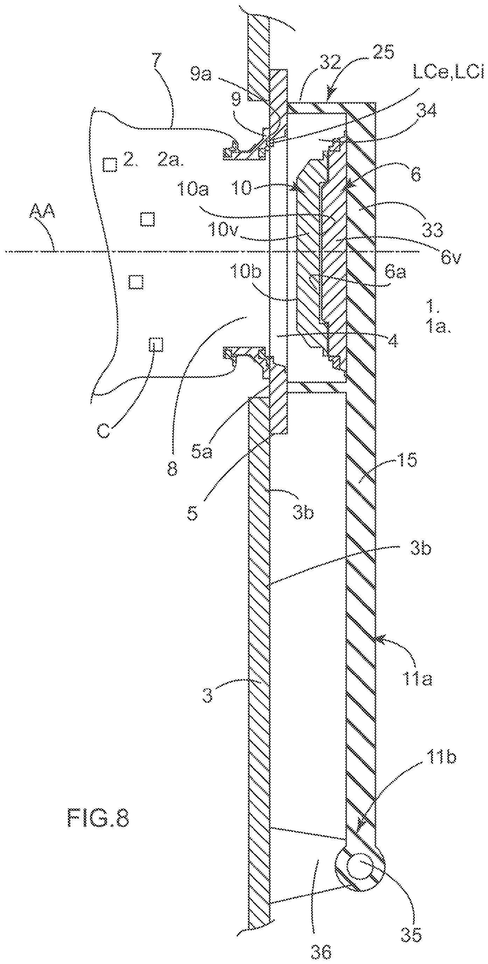

- La figure 8 est une vue analogue à celle de la figure 7, alors que le vantail de la seconde porte est appliqué et maintenu par le vantail de la première porte, lequel a été écarté de la première bride, mais n'est pas totalement ouvert.

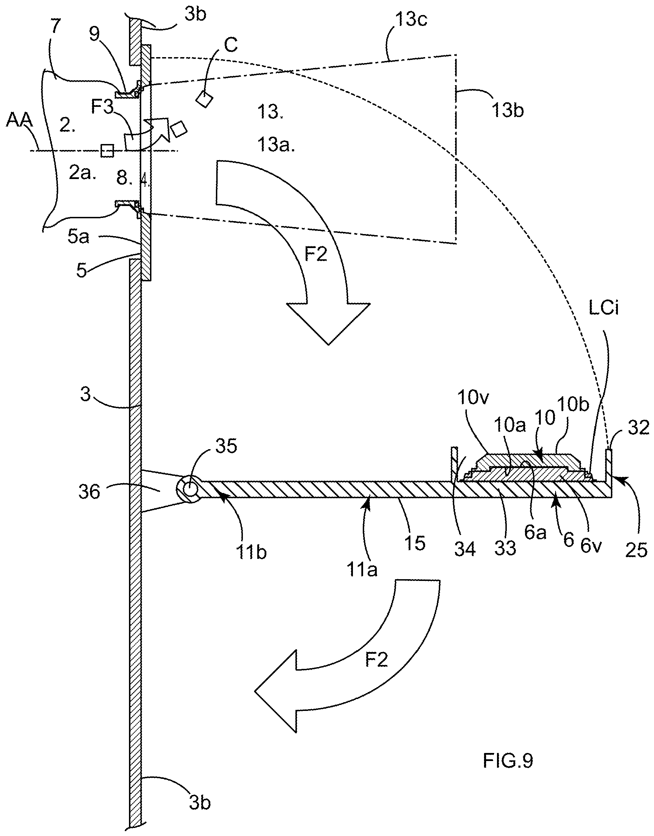

- La figure 9 est une vue analogue à celle de la figure 8, alors que alors que les vantaux des deux portes sont dans un état intermédiaire ouvert, mais pas totalement ouvert.

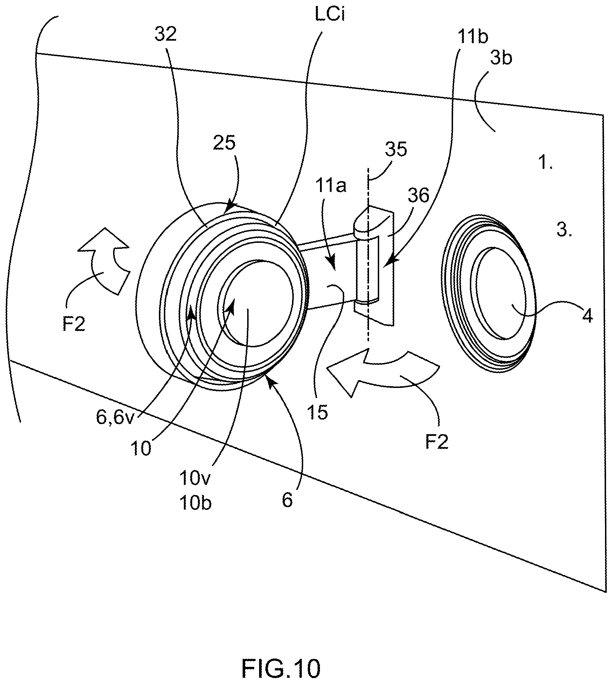

- La figure 10 est une vue en perspective depuis l'intérieur de la première enceinte, sensiblement dans la même situation que celle de la figure 9.

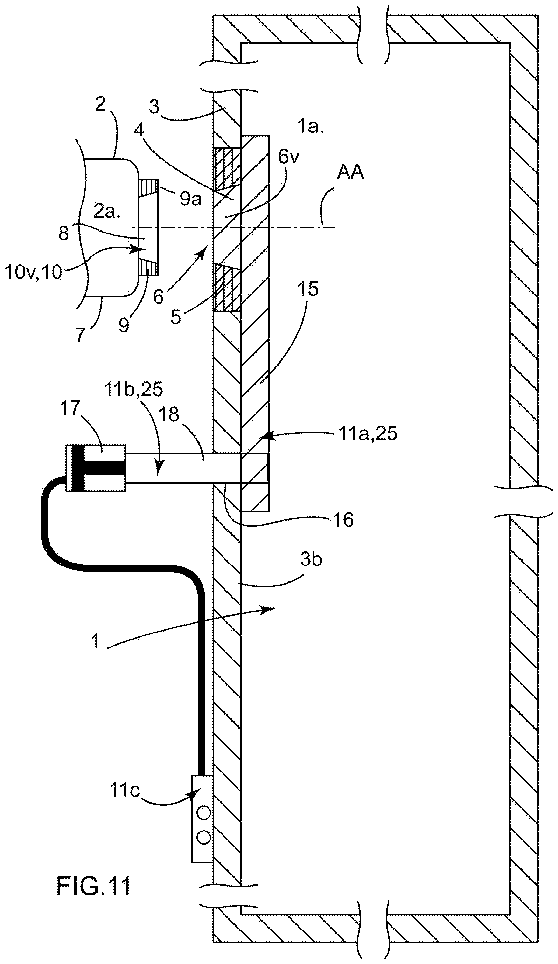

- La figure 11 est une vue en coupe en coupe par un plan axial, d'un dispositif de jonction étanche entre une première enceinte et une seconde enceinte représentées partiellement, alors que les deux enceintes sont à proximité l'une de l'autre mais non encore plaquées, les vantaux des deux portes des deux enceintes étant à l'état fermé, le dispositif de jonction étanche comportant dans cette autre réalisation des moyens structurellement intégrés à la première porte et en forme d'espace d'écartement de taille appropriée, placé entre l'espace de communication et la ligne critique intérieure, aptes - lorsque la première porte et la seconde porte sont à l'état ouvert - à former une séparation entre l'espace de communication et la ligne critique annulaire intérieure, selon une exécution dans laquelle les moyens porteurs et les moyens de manoeuvre de déplacement de la première porte sont agencés pour être aptes à déplacer le premier vantail, portant le second vantail, à partir de son état fermé selon un mouvement initial de translation le long d'un axe orthogonal à la première ouverture, à la première bride et au premier vantail lorsqu'il se trouve à l'état fermé et un mouvement ultérieur de rotation autour d'un axe orthogonal à la première ouverture, la première bride et au premier vantail lorsqu'il se trouve à l'état fermé.

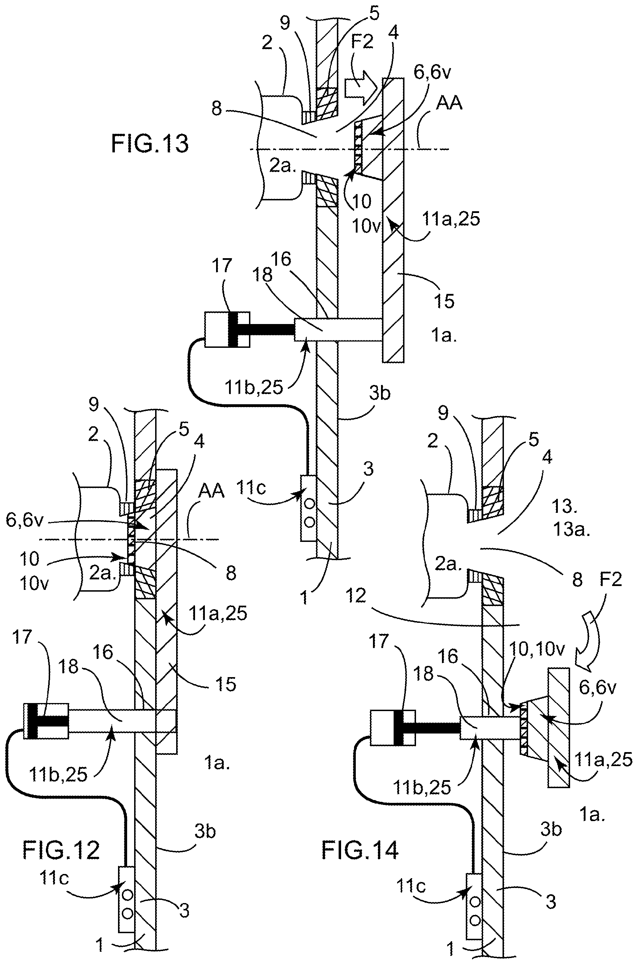

- La figure 12 est un schéma correspondant à la figure 11, alors que les deux brides et les vantaux des deux portes des deux enceintes sont appliqués l'un sur l'autre, les vantaux des portes des deux enceintes étant à l'état fermé.
- La figure 13 est un schéma analogue à la figure 12, alors que la seconde bride est assemblée à première bride et le vantail de la seconde porte assemblé au vantail de la première porte, une fois le mouvement initial de translation effectué mais avant que ne soit effectué le mouvement ultérieur de rotation, le vantail de la première porte et le vantail de la seconde porte étant écartés de la première bride, sans que le vantail de la première porte se trouve déjà à l'état complètement ouvert.
- La figure 14 est un schéma analogue aux figures 12 et 13, une fois le mouvement de rotation partiellement mais non complètement effectué, le vantail de la première porte ne se trouvant pas encore à l'état complètement ouvert.

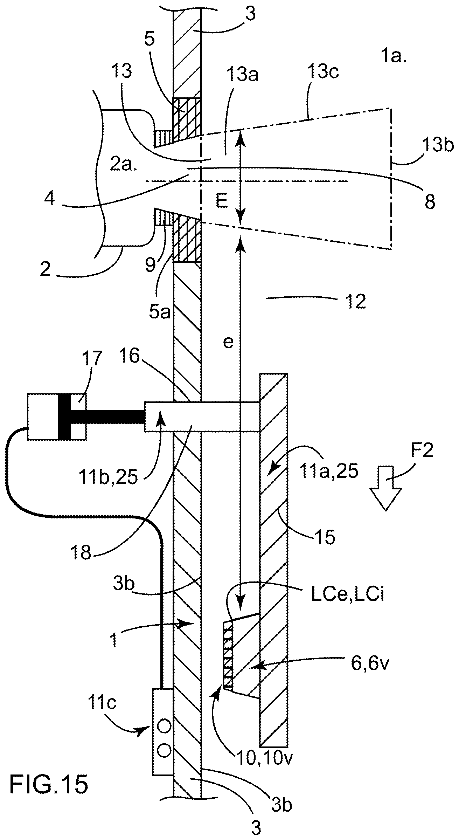

- La figure 15 est un schéma analogue aux figures 12 à 14, une fois le mouvement de rotation complètement effectué, le vantail de la première porte se trouvant à l'état ouvert, comme le vantail de la seconde porte, où il est disposé dans une position latérale par rapport à la première ouverture, à la première bride et au premier vantail lorsqu'il se trouve à l'état fermé, au moins sensiblement orthogonale à l'axe de l'espace d'entrée/sortie, l'espace d'écartement étant situé au-delà de la limite latérale du premier espace d'entrée/sortie.

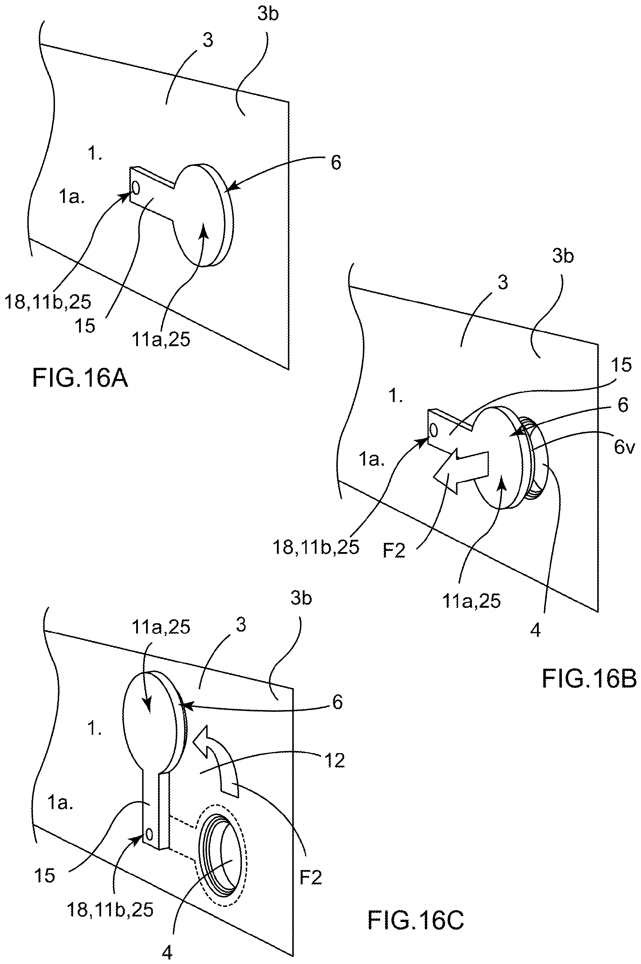

- Les figures 16A, 16B et 16C sont trois vues en perspective partielle, depuis l'intérieur de la première enceinte dans le cas ou l'espace d'écartement est un espace vide.

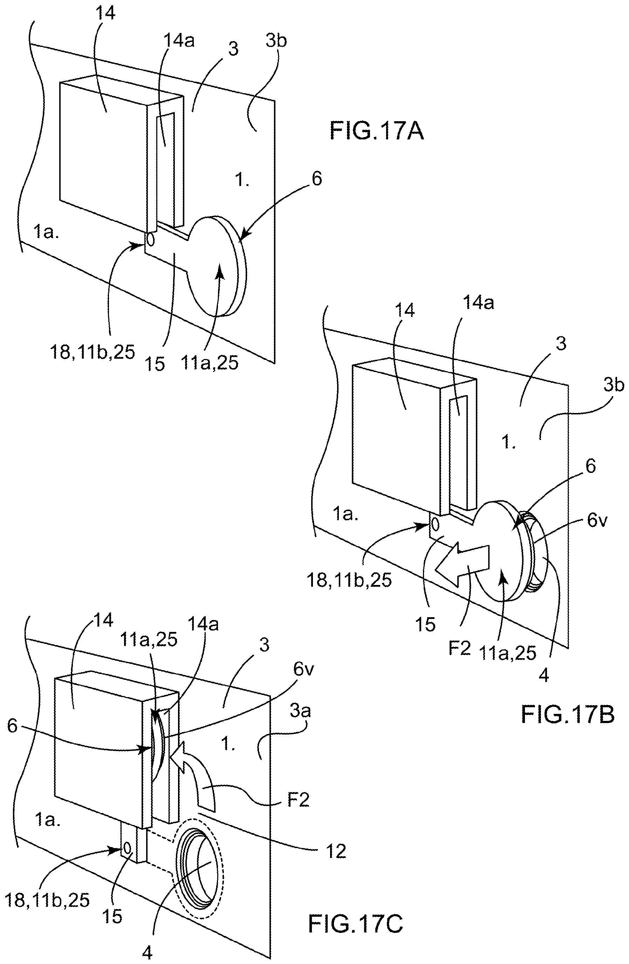

- Les figures 17A, 17B et 17C sont trois vues analogues aux figures 16A, 16B et 16C, dans le cas où la première enceinte comporte également une paroi de séparation fixe qui à l'état ouvert du premier vantail est placée et s'étend entre le premier vantail et le premier espace d'entrée/sortie.

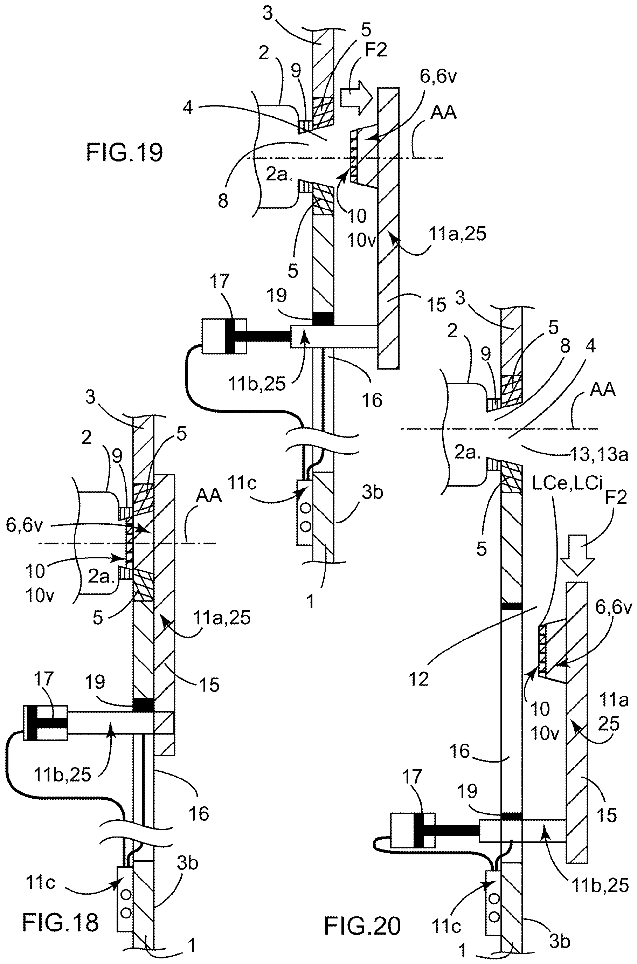

- La figure 18 est un schéma correspondant à la figure 12 d'un dispositif de jonction étanche entre une première enceinte et une seconde enceinte, alors que les deux brides et les vantaux des deux portes des deux enceintes sont appliqués l'un sur l'autre, les vantaux des portes des deux enceintes étant à l'état fermé, le dispositif de jonction étanche comportant dans cette réalisation des moyens structurellement intégrés à la première porte et en forme d'espace d'écartement de taille appropriée, placé entre l'espace de communication et la ligne critique intérieure, aptes - lorsque la première porte et la seconde porte sont à l'état ouvert - à former une séparation entre l'espace de communication et la ligne critique annulaire intérieure, selon une exécution dans laquelle les moyens porteurs et les moyens de manoeuvre de déplacement de la première porte sont agencés pour être aptes à déplacer le premier vantail, portant le second vantail, à partir de son état fermé selon un mouvement initial de translation le long d'un axe au moins sensiblement orthogonal à la première ouverture, à la première bride et au premier vantail lorsqu'il se trouve à l'état fermé et un mouvement ultérieur de translation le long d'un axe parallèle à la première ouverture, à la première bride et au premier vantail lorsqu'il se trouve à l'état fermé.
- La figure 19 est un schéma analogue à la figure 18, alors que la seconde bride est assemblée à la première bride et le vantail de la seconde porte assemblé au vantail de la première porte, une fois le mouvement initial de translation effectué mais avant que ne soit effectué le mouvement ultérieur de translation, le vantail de la première porte étant écarté de la première bride, sans se trouver encore à l'état complètement ouvert.
- La figure 20 est un schéma analogue aux figures 18 et 19, une fois le mouvement de translation complètement effectué, le vantail de la première porte se trouvant à l'état ouvert, comme le vantail de la seconde porte, où il est disposé dans une position latérale par rapport à la première ouverture, à la première bride et au premier vantail lorsqu'il se trouve à l'état fermé, au moins sensiblement orthogonale à l'axe du premier espace d'entrée/sortie, l'espace d'écartement étant situé au-delà de la limite latérale de l'espace d'entrée/sortie.

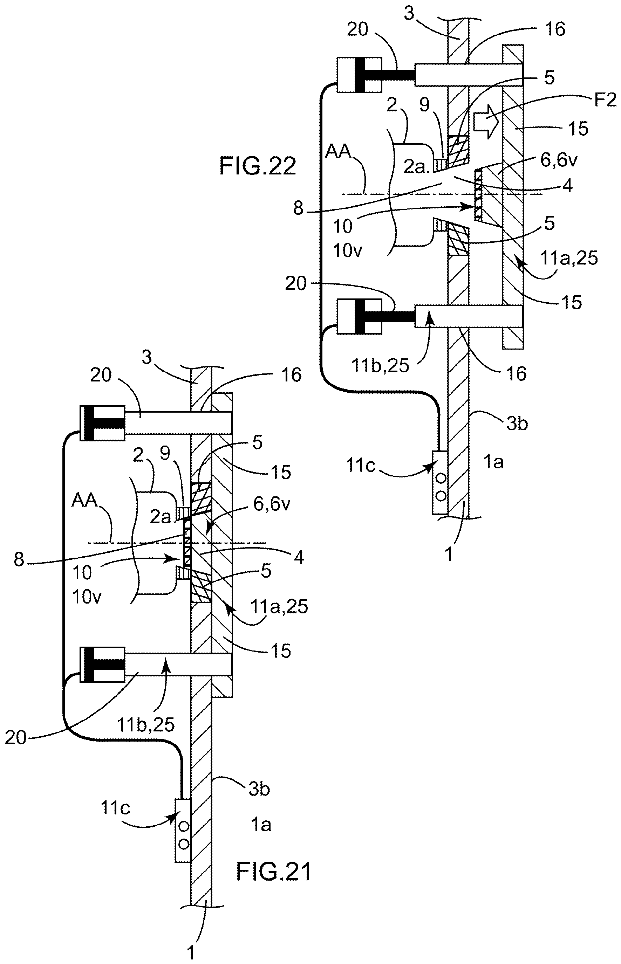

- La figure 21 est un schéma correspondant aux figures 12 et 18 d'un dispositif de jonction étanche entre une première enceinte et une seconde enceinte, alors que les deux brides et les vantaux des deux portes des deux enceintes sont appliqués l'un sur l'autre, les vantaux des portes des deux enceintes étant à l'état fermé, le dispositif de jonction étanche comportant dans cette réalisation des moyens structurellement intégrés à la première porte et en forme d'espace d'écartement de taille appropriée, placé entre l'espace de communication et la ligne critique intérieure, aptes - lorsque la première porte et la seconde porte sont à l'état ouvert - à former une séparation entre l'espace de communication et la ligne critique annulaire intérieure, selon une exécution dans laquelle les moyens porteurs et les moyens de manoeuvre de déplacement de la première porte sont agencés pour être aptes à déplacer le premier vantail, portant le second vantail, à partir de son état fermé selon un mouvement de translation le long d'un axe orthogonal à la première ouverture, à la première bride et au premier vantail lorsqu'il se trouve à l'état fermé.
- La figure 22 est un schéma analogue à la figure 21, alors que la seconde bride est assemblée à la première bride et le vantail de la seconde porte assemblé au vantail de la première porte, une fois le mouvement de translation partiellement mais non complètement effectué, le vantail de la première porte ne se trouvant pas encore à l'état complètement ouvert.

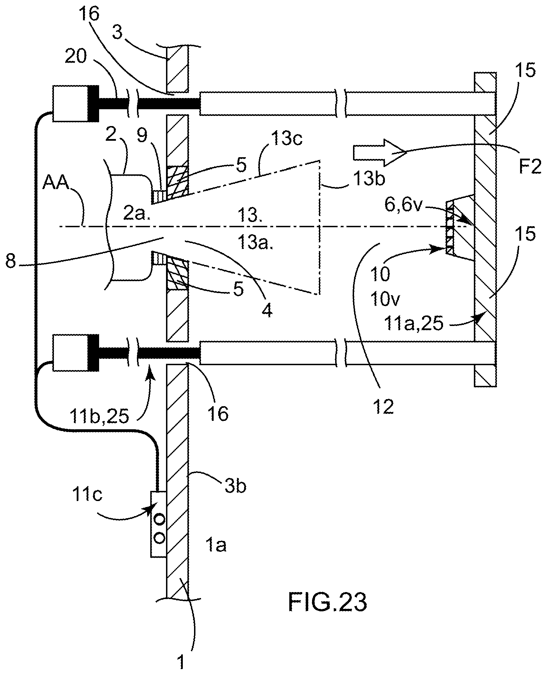

- La figure 23 est un schéma analogue aux figures 21 et 22, une fois le mouvement de translation complètement effectué, le vantail de la première porte se trouvant à l'état ouvert, comme le vantail de la seconde porte, où il est disposé dans une position au moins sensiblement en regard de la première ouverture, de la première bride et de la position du premier vantail à l'état fermé, au moins sensiblement orthogonale à l'axe du premier espace d'entrée/sortie, l'espace d'écartement étant situé au-delà de la limite d'extrémité du premier espace d'entrée/sortie opposée à la première ouverture et à la première bride.

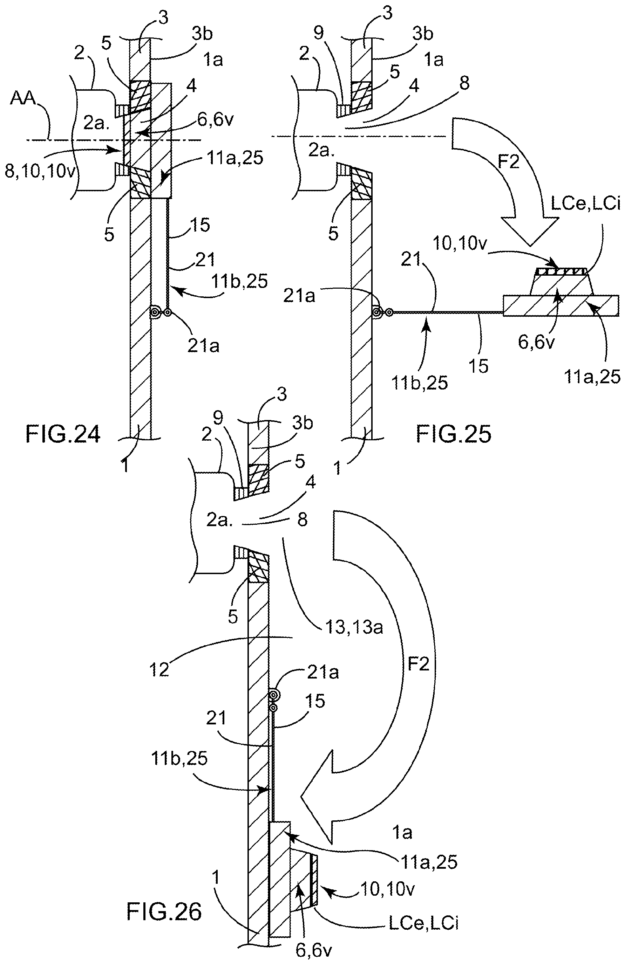

- La figure 24 est un schéma correspondant aux figures 12, 18 et 21 d'un dispositif de jonction étanche entre une première enceinte et une seconde enceinte, alors que les deux brides et les vantaux des deux portes des deux enceintes sont appliqués l'un sur l'autre, les vantaux des portes des deux enceintes étant à l'état fermé, le dispositif de jonction étanche comportant dans cette réalisation des moyens structurellement intégrés à la première porte et en forme d'espace d'écartement de taille appropriée, placé entre l'espace de communication et la ligne critique intérieure, aptes - lorsque la première porte et la seconde porte sont à l'état ouvert - à former une séparation entre l'espace de communication et la ligne critique annulaire intérieure, selon une exécution dans laquelle les moyens porteurs et les moyens de manoeuvre de déplacement de la première porte sont agencés pour être aptes à déplacer le premier vantail, portant le second vantail, à partir de son état fermé selon un mouvement de rotation autour d'un axe parallèle à la première ouverture, à la première bride et au premier vantail lorsqu'il se trouve à l'état fermé.
- La figure 25 est un schéma analogue à la figure 24, alors que la seconde bride est assemblée à première bride et le vantail de la seconde porte assemblé au vantail de la première porte, une fois le mouvement de rotation partiellement mais non complètement effectué, le vantail de la première porte ne se trouvant pas encore à l'état complètement ouvert.
- La figure 26 est un schéma analogue aux figures 24 et 25, une fois le mouvement de rotation complètement effectué, le vantail de la première porte se trouvant à l'état ouvert, comme le vantail de la seconde porte, où il est disposé dans une position latérale par rapport à la première ouverture, à la première bride et au premier vantail lorsqu'il se trouve à l'état fermé, au moins sensiblement orthogonale à l'axe du premier espace d'entrée/sortie, l'espace d'écartement étant situé au-delà de la limite latérale du premier espace d'entrée/sortie.

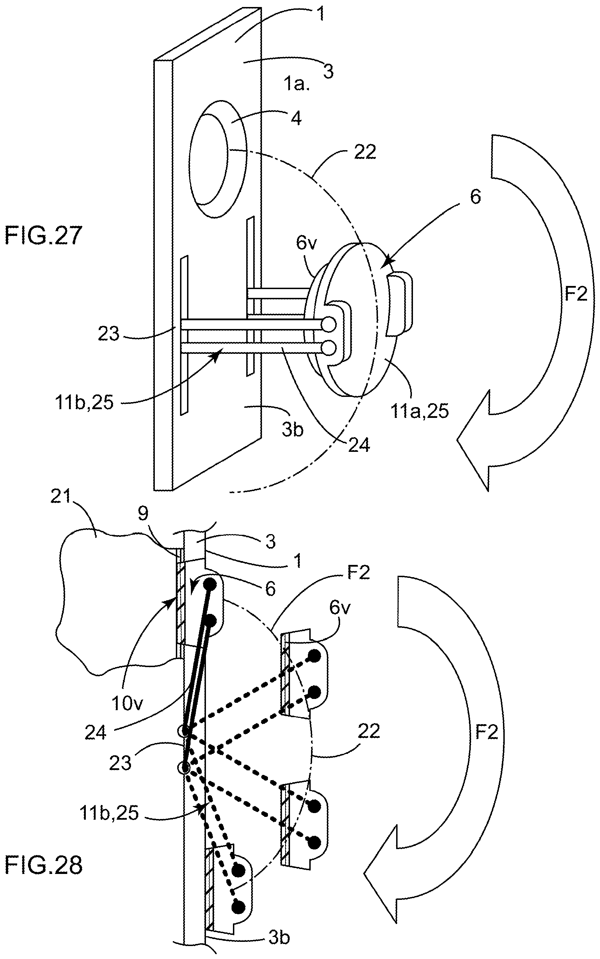

- La figure 27 est un schéma en perspective d'un dispositif de jonction étanche entre une première enceinte et une seconde enceinte, alors que le premier vantail de la première porte est dans un état ouvert intermédiaire, le dispositif de jonction étanche comportant dans cette réalisation des moyens structurellement intégrés à la première porte et en forme d'espace d'écartement de taille appropriée, placé entre l'espace de communication et la ligne critique intérieure, aptes - lorsque la première porte et la seconde porte sont à l'état ouvert - à former une séparation entre l'espace de communication et la ligne critique annulaire intérieure, selon une exécution dans laquelle les moyens porteurs et les moyens de manoeuvre de déplacement de la première porte sont agencés pour être aptes à déplacer le premier vantail, portant le second vantail, à partir de son état fermé, selon un mouvement de translation le long d'un axe curviligne..
- La figure 28 est un schéma en coupe du dispositif selon la quatrième variante de la figure 22, lorsqu'il se trouve à l'état fermé, dans deux états ouvert intermédiaires et à l'état ouvert.

Un dispositif de transfert étanche et aseptique entre une première enceinte 1 et une seconde enceinte 2 tel que celui ici considéré est dit « à double porte ». A titre exemplatif, mais non limitatif, un tel dispositif est du type de celui connu sous la maque BIOSAFE® et décrit dans le document EP-A-0688020.

Un tel transfert peut être nécessaires dans nombre de domaines techniques, notamment mais non exclusivement le domaine biopharmaceutique.

La première enceinte 1 - par exemple fixe, rigide et de relativement grande taille - comprend une structure incluant une première paroi 3 fermée, pleine et rigide, mais pourvue d'une première ouverture 4, elle-même limitée par une première bride annulaire 5, de face extérieure 5a, l'une et l'autre de l'ouverture 4 et de la bride 5 étant par exemple circulaires, cette réalisation n'étant pas limitative. Selon une réalisation, la première paroi est verticale ou inclinée sur la verticale d'un angle de l'ordre de 30° à 45°. La paroi 3, ayant une face intérieure 3b, limite l'espace intérieur 1a de l'enceinte 1.

Est qualifié d' «intérieur » en liaison avec la première enceinte 1, ce qui est dans ou vers l'espace intérieur 1a limité par la paroi 3. Est qualifié d' «extérieur » en liaison avec la première enceinte 1, ce qui est hors de son espace intérieur 1a limité par la paroi 3.

La première enceinte 1 comprend également une première porte 6 supportée par la structure, notamment par la paroi 3, par l'intermédiaire de moyens porteurs 11a, mobiles ou déformables. Le vantail 6v de la première porte 6 (ou premier vantail 6v) est monté à déplacement par rapport à la première bride 5 formant siège, et agencé pour être déplacé et amené soit à l'état fermé où il coopère avec la bride 5 en fermant l'ouverture 4 soit à l'état ouvert où il est dégagé de la bride 5 et placé dans l'espace intérieur 1a en ouvrant l'ouverture 4. Par synecdoque, on dira que la première porte 6 est montée à déplacement par rapport à la première bride 5 pour se trouver à l'état fermé ou à l'état ouvert où, respectivement, elle ferme ou ouvre la première ouverture 4. Le vantail 6v comporte une face extérieure 6a.

Le cas échéant, la première enceinte 1 comprend plusieurs premières portes telles que la première porte 6, le dispositif de transfert faisant partie d'une ligne opératoire propre à permettre de réaliser une ou plusieurs opérations avant et/ou après le transfert, telles que fabrication, traitement, manipulation, utilisation, mesure, contrôle, analyse, ou autre...

La seconde enceinte 2 - par exemple une poche déplaçable, à usage unique, flexible au moins partiellement et d'une plus petite taille - comprend une structure incluant une seconde paroi 7 fermée, pleine et souple, mais pourvue d'une seconde ouverture 8, elle-même limitée par une seconde bride annulaire 9, de face extérieure 9a, l'une et l'autre de l'ouverture 8 et de la bride 9 étant par exemple circulaires, cette réalisation n'étant pas limitative. La paroi 7 limite l'espace intérieur 2a de l'enceinte 2.

Est qualifié d' «intérieur » en liaison avec la seconde enceinte 2, ce qui est dans ou vers son espace intérieur 2a limité par la paroi 7. Est qualifié d' «extérieur » en liaison avec la seconde enceinte 2, ce qui est hors de son espace intérieur 2a limité par la paroi 7.

La seconde enceinte 2 comprend également une seconde porte 10, ayant un second vantail 10v, de face extérieure 10a et de face intérieure 10b. Le vantail 10v, monté à déplacement par rapport à la seconde bride 9 formant siège, et agencé pour se trouver à l'état fermé ou à l'état ouvert où, respectivement, il ferme ou ouvre la seconde ouverture 8. Comme précédemment, par synecdoque, on dira que la seconde porte 10 est montée à déplacement par rapport à la seconde bride 9 pour se trouver à l'état fermé ou à l'état ouvert où, respectivement, elle ferme ou ouvre la seconde ouverture 8.

Le dispositif de transfert étanche et aseptique est tel qu'à une même première enceinte 1 peuvent être associées lorsque nécessaire plusieurs secondes enceintes telles que la seconde enceinte 2, successivement si la première enceinte 1 comprend une seule ouverture et une seule porte 4 et 6 et/ou simultanément si la première enceinte 1 comprend plusieurs ouvertures et portes 4 et 6.

L'une des enceintes 1, 2, contient originellement un certain contenu C. Par exemple, le certain contenu C se trouve originellement dans la première enceinte 1 ou dans la seconde enceinte 2, le transfert ayant pour but de l'amener finalement, respectivement, dans la seconde enceinte 2 ou dans la première enceinte 1, et ce en faisant passer le certain contenu C dans un espace de communication 13 ménagé entre les deux enceintes 1 et 2.

Le certain contenu C a pour caractéristique d'avoir vocation à, et donc de pouvoir, être transféré via l'espace de communication 13. Dans le domaine biopharmaceutique, le certain contenu C peut être par exemple d'un objet stérile tel qu'un récipient, un élément de récipient tel qu'un bouchon, une seringue, mais aussi des éléments de contrôle d'environnement, voire même des déchets produits lors d'opération de fabrication ou de traitement, déchets qu'il s'agit de transférer afin de les éliminer...

Des transferts, tels que ceux ici considérés, interviennent dans le cadre de processus plus complexes dans lesquels le certain contenu C subit une ou plusieurs opérations avant et/ou après le transfert. Ces opérations consistent en fabrication, assemblage, traitement, manipulation, utilisation, mesure, contrôle, analyse, ou autre, l'exigence d'asepsie devant être remplie.

D'autre part, il importe que le transfert du certain contenu C via l'espace de communication 13 ne soit pas entravé par le vantail 6v de la première porte 6 à l'état ouvert, que le certain contenu C ne détériore pas ce premier vantail 6v et inversement que ce premier vantail 6v ne détériore pas le certain contenu C, donc que le premier vantail 6v ne puisse être atteint par le certain contenu C lors de son transfert.

L'invention a pour objet tant ce dispositif de jonction étanche que le dispositif de transfert qui l'inclut, que la première enceinte 1 et la seconde enceinte 2, et, enfin, le procédé de mise en oeuvre de ce dispositif de jonction étanche et de ce dispositif de transfert.

La première bride 5 et la seconde bride 9 sont complémentaires l'une de l'autre tant structurellement que fonctionnellement. Elles sont conçues afin que les vantaux 6v et 10v soient aptes à être maintenus de façon amovible plaqués l'un contre l'autre par leurs faces extérieures 5a et 9a, de façon hermétique, en étant ainsi isolées du milieu extérieur.

À cet effet, il est prévu de pourvoir les brides 5 et 9 de moyens d'assemblage tels que par exemple les formes complémentaires données à leurs faces respectives 5a et 9a devant être plaquées l'une contre l'autre et un ou des joints d'étanchéité sur la seconde bride 9.

D'autre part, il est prévu d'associer aux brides 5 et 9 un mécanisme de solidarisation amovible, par exemple à cames, non représenté.

La première porte 6 et la seconde porte 10 - plus précisément leurs vantaux 6v et 10v - sont complémentaires l'une de l'autre tant structurellement que fonctionnellement. Elles sont conçues afin d'être aptes à être plaquées l'une contre l'autre par les faces extérieures 6a et 10a de leur vantail respectif 6v et 10v, de façon hermétique, en étant ainsi isolées du milieu extérieur.

À cet effet, il est prévu de pourvoir les portes 6 et 10 - plus précisément leurs vantaux 6v et 10v - de moyens d'assemblage tels que par exemple les formes complémentaires données à leurs faces extérieures respectives 6a et 10a devant être plaquées l'une contre l'autre et un ou des joints d'étanchéité.

Il est également prévu des moyens de manoeuvre de déplacement 11b aptes à déplacer la première porte 6 - plus précisément son vantail 6v - entre ses états fermé et ouvert.

Il est également prévu des moyens de commande 11c des moyens de manoeuvre de déplacement 11b.

Les moyens porteurs 11a, mobiles ou déformables, les moyens de manoeuvre de déplacement 11b et les moyens de commande 11c sont intégrés les uns aux autres et intégrés à la première porte 6.

Il est également prévu des moyens de solidarisation amovible associés aux deux portes 6 et 10, non représentés, aptes à maintenir de façon amovible les deux portes 6 et 10 - plus précisément leurs vantaux 6v et 10v - plaquées l'une contre l'autre.

Un tel dispositif de transfert étanche est mis en oeuvre comme suit.

On part d'une situation où l'on dispose de la première enceinte 1 dont la première porte 6, respectivement le vantail 6v, est à l'état fermé et d'une seconde enceinte 2 dont la seconde porte 10, respectivement le vantail 10v, est à l'état fermé, l'une des enceintes 1, 2 contenant originellement le certain contenu C, comme précédemment indiqué.

Lorsque le premier vantail 6v est à l'état fermé, il coopère avec la première ouverture 4, de sorte que la première ouverture 4, la première bride 5 et le premier vantail 6v à l'état fermé sont sensiblement coplanaires aux épaisseurs près, le premier vantail 6v étant escamoté, au sens où il ne saille pas substantiellement de la première paroi 3.

On met en oeuvre le dispositif de jonction étanche entre les deux enceintes 1 et 2 et à cet effet, on réalise les étapes opératoires successives décrites ci-après.

On amène les deux enceintes 1 et 2 à se trouver placées au moins sensiblement coaxialement, en regard et à proximité l'une de l'autre (flèches F1 des figures 1 et 6). Puis, on plaque la première bride 5 et la seconde bride 9 l'une contre l'autre de façon hermétique par leurs faces extérieures 5a et 9a, et on amène le premier vantail 6v de la première porte 6 et le second vantail 10v de la seconde porte 10 à être plaqués l'un contre l'autre de façon hermétique par leurs faces extérieures (figures 2, 7, 12, 18, 21, 24). Les brides 5 et 9 et les portes 6 et 10 sont alors coaxiales d'axe AA.

On associe rigidement d'une part la première bride 5 et la seconde bride 9, d'autre part les deux vantaux 6v et 10v de la première porte 6 et de la seconde porte 10, plaqués comme il vient d'être indiqué, puis on manoeuvre le premier vantail 6v pour le déplacer à partir de son état fermé originel et l'amener à l'état totalement ouvert final. Ce faisant, on déplace le second vantail 10v et on l'amène également à partir de son état fermé originel à son état totalement ouvert final. A ce déplacement des deux vantaux 6v et 10v correspond un mouvement - ou une combinaison de mouvements - de ceux-ci illustré sur les figures par les flèches F2.

Dans cette situation, la première enceinte 1 et la seconde enceinte 2 communiquent entre elles par leurs ouvertures respectives 4, 8, à l'état ouvert, l'espace de communication 13 étant ménagé entre les deux enceintes 1 et 2.

Dans cette situation, on fait passer le certain contenu C de l'enceinte 1 ou 2 où il se trouvait originellement à l'autre enceinte 2 ou 1, respectivement, où l'on souhaite qu'il se trouve finalement (flèches F3).

Une fois ce transfert du certain contenu C effectué, on amène la première porte 6 et la seconde porte 10, respectivement les vantaux 6v et 10v, à l'état fermé, à tout le moins la porte de l'enceinte où le certain contenu C se trouve finalement.

Puis on peut dissocier les deux enceintes 1 et 2.

Il est entendu que la première porte 6 - plus précisément le premier vantail 6v - peut passer par et se trouver à un instant donné dans un état intermédiaire ouvert, mais pas totalement ouvert, entre l'état fermé et l'état ouvert (figures 8, 9, 10, 13, 16B, 17B, 19, 22, 25, 27).

L'espace de communication 13 a une forme générale correspondant à celle d'un tronc de cylindre d'axe AA passant par le bord des ouvertures 4 et 8 ou une forme voisine de celle d'un tel tronc de cylindre, par exemple une forme de double tronc de cône ou de double tronc de pyramide ayant une petite base médiane correspondant au bord des ouvertures 4 et 8 et deux grandes bases de part et d'autre, respectivement dans les enceintes 1 et 2, notamment dans l'espace intérieur 1a à l'écart de la première ouverture 4.

L'espace de communication 13 est constitué par un premier espace d'entrée/sortie 13a dans le/de l'espace intérieur 1a de la première enceinte 1 et un second espace d'entrée/sortie dans le/de l'espace intérieur de la seconde enceinte 2.

Le premier espace d'entrée/sortie 13a a une forme générale de tronc de cylindre, de cône ou de pyramide, s'étendant dans l'espace intérieur 1a au moins sensiblement axialement d'axe AA, à partir de l'ouverture 4 et de la bride 5.

Le premier espace d'entrée/sortie 13a, représenté schématiquement, est virtuellement limité par une limite d'extrémité proximale formée par la première ouverture 4 et la première bride 5, par une limite d'extrémité distale 13b opposée à la première ouverture 4 et à la première bride 5, et par une limite latérale 13c entre les limites d'extrémité proximale et distale 13b.

Le dispositif de jonction étanche présente en fonctionnement ce que l'homme de l'art connaît sous le terme de ligne critique.

Une ligne critique intérieure LCi se trouve sur la face extérieure 6a du vantail 6v de la première porte 6 en contact avec le milieu extérieur et non recouverte par face extérieure 10a du vantail 10v de la seconde porte 10, lorsque les vantaux 6v et 10v des deux portes 6 et 10 sont appliqués l'un contre l'autre.

Une ligne critique extérieure LCe se trouve sur la face extérieure 9a de la seconde bride 9 en contact avec le milieu extérieur et non recouverte par la face extérieure 5a première bride 5, lorsque les brides 5 et 9 sont appliquées l'une contre l'autre.

Ces lignes critiques LCi et LCe constituent des zones où il existe un risque de contamination du fait qu'elles sont en contact avec le milieu extérieur.

Ces lignes critiques LCi et LCe sont donc inévitables car il est impossible que le vantail 10v de la seconde porte 10 recouvre intégralement le vantail 6v de la première porte 6 et que la face extérieure 5a de la première bride 5 recouvre intégralement la face extérieure 9a de la seconde bride 9, même si la forme et le dimensionnement des brides 5 et 9 et des vantaux 6v et 10v des portes 6 et 10, respectivement, sont choisis pour que ces lignes critiques LCi et LCe soient minimales.

Le dispositif de jonction étanche comporte également des moyens 25 structurellement intégrés à la première porte 6 et/ou des moyens 26 structurellement intégrés à la seconde bride 9 qui sont aptes - lorsque la première porte 6 et la seconde porte 10, respectivement les vantaux 6v et 10v, sont à l'état ouvert - à former une séparation 25, 26 entre l'espace de communication 13 et la ligne critique annulaire intérieure LCi et/ou la ligne critique annulaire extérieure LCe.

Le dispositif de transfert étanche qui incorpore le dispositif de jonction étanche comporte donc lui aussi les moyens 25 et/ou 26 aptes - lorsque la première porte 6 et la seconde porte 10, respectivement les vantaux correspondants 6v et 10v, sont à l'état ouvert - à former une séparation 25, 26 entre l'espace de communication 13 et la ligne critique annulaire intérieure LCi et/ou la ligne critique annulaire extérieure LCe.

On entend par intégré - relativement aux moyens 25 et 26 et à la première porte 6 et la seconde bride 9 - le fait que ces moyens 25 et 26 sont, respectivement, incorporés à ou encore inclus dans la porte 6 et la bride 9, de manière à former un tout cohérent avec elle. En d'autres termes, les moyens 25 et 26 ne sont pas, respectivement, étrangers à, rapportés sur, ou extérieurs à la porte 6 et la bride 9.

Préférentiellement, les moyens 25 et 26 sont en totalité intégrés à la première porte 6 et à la seconde bride 9.

Le procédé de mise en oeuvre du dispositif de jonction étanche est tel que lorsque la première porte 6 et la seconde porte 10 sont à l'état ouvert, on met en oeuvre les moyens intégrés 25 et/ou 26 précédemment indiqués et on forme ainsi la dite séparation 25, 26. Cette séparation 25, 26, constitue à elle seule les moyens de protection contre toute contamination à l'endroit de la ligne critique annulaire intérieure LCi et/ou de la ligne critique annulaire extérieure LCe.

Préférentiellement, la protection est assurée pour la ligne critique annulaire intérieure LCi et la ligne critique annulaire extérieure LCe. Toutefois, on peut envisager dans certaines situations de n'assurer la protection que de l'une seulement des deux lignes critiques LCi et LCe.

Chacun des moyens intégrés 25 et 26 peut faire l'objet de l'un de deux modes de réalisation suivants.

Dans une première réalisation possible que, notamment illustrent les figures 1 à 10, les moyens intégrés 25, 26 se présentent sous la forme d'un déflecteur annulaire, plus généralement une barrière formant obstacle, placé entre l'espace de communication 13 et la ligne critique LCi, LCe.

Dans une seconde réalisation possible que, notamment illustrent les figures 11 à 28, les moyens intégrés 25, 26 se présentent sous la forme d'un espace d'écartement 12 de taille appropriée suffisante placé entre l'espace de communication 13 et la ligne critique LCi, LCe.

Dans l'un comme dans l'autre cas, la ligne critique LCi, LCe est ainsi normalement non atteignable lors du passage du certain contenu C dans l'espace de communication 13.

Exprimer qu'une ligne critique LCi, LCe est normalement non atteignable lors du passage du certain contenu C dans l'espace de communication 13, cela signifie que lorsque l'on fait passer le certain contenu C de l'une à l'autre enceinte 1, 2, dans des conditions normales d'utilisation du dispositif de transfert étanche, le certain contenu C ne vient pas au contact avec la ligne critique LCi, LCe. On entend par conditions normales d'utilisation du dispositif de transfert étanche, le fait que le certain contenu C est transféré selon le cheminement adapté à la forme de l'espace de communication 13, par exemple dans la partie médiane de cet espace.

On décrit maintenant plus spécialement une variante d'exécution des moyens 26 intégrés à la seconde bride 9 selon la première réalisation (barrière formant obstacle sous forme de déflecteur annulaire) en référence aux figures 1 à 5.

Dans cette variante, il est prévu des moyens 26 sous la forme d'un déflecteur annulaire intégré à la seconde bride 9 et limitant la seconde ouverture 8 à sa périphérie. Ce déflecteur 26 saille du plan frontal libre de la seconde bride 9 formant interface avec la première bride 5 constitué par la face extérieure 9a.

Le déflecteur 26 a une forme générale cylindrique correspondant à la forme de la seconde ouverture 8. Le cas échéant, selon une possibilité non représentée, son bord distal libre 27 (écarté du corps de la bride 9) est légèrement évasé latéralement.

Le déflecteur 26 forme avec la partie périphérique extérieure de la seconde bride une cavité annulaire 28 dans le fond ou au voisinage du fond de laquelle se trouve la ligne critique extérieure LCe. Cette structure vient renforcer la séparation exercée par le déflecteur 26 entre l'espace de communication 13 et la ligne critique extérieure LCe.

Compte tenu de la présence du déflecteur 26 en saillie et de ce que la seconde bride 9 forme siège pour la seconde porte 10, il est prévu que le vantail 10v de la seconde porte 10 comprenne sur sa face intérieure 10b une rainure annulaire 29 s'ouvrant vers l'intérieur de la seconde enceinte 2. Cette rainure 29 est agencée de manière à être apte à recevoir le déflecteur 26 de la seconde bride 9 lorsque la seconde porte est à l'état fermé sur la seconde bride 9 (figures 1 et 2).

La rainure 29 est ménagée avantageusement vers l'intérieur d'une partie périphérique annulaire renflée 30 du vantail 10v de la seconde porte 10.

Cette partie renflée 30 forme vers la face extérieure 10a du second vantail 10v une partie en forme de tenon apte à être logée dans une partie complémentaire en forme de mortaise 31 ménagée sur la face extérieure 6a du vantail de la première porte 6.

On décrit maintenant plus spécialement une variante d'exécution des moyens 25 intégrés à la première porte 6, selon la première réalisation (barrière formant obstacle sous forme de déflecteur annulaire) en référence aux figures 6 à 10.

Dans cette variante, il est prévu des moyens 25 sous la forme d'un déflecteur annulaire intégré à la première porte 6.

Dans le cas représenté sur les figures, ce déflecteur 25 fait partie des moyens porteurs 11a du vantail de la première porte 6 lorsque celle-ci est au moins à l'état ouvert.

Le déflecteur 25 est disposé autour de la première porte 6.

Alternativement, le déflecteur 25 est porté par les moyens porteurs 11a.

Selon une autre possibilité non représentée, le déflecteur 25 est fait partie du vantail même 6v de la première porte 6.

Le déflecteur 25 a une forme générale cylindrique plus large que la forme du vantail 6v de la première porte 6 et du vantail 10v de la seconde porte 10 et plus large que les ouvertures 4 et 8. Le cas échéant, selon une possibilité non représentée, son bord distal libre 32 (écarté des moyens porteurs 11a du vantail de la première porte 6 ou du vantail de la première porte 6) est légèrement resserré latéralement.

Le déflecteur 25 forme avec la partie centrale 33 des moyens porteurs 11a, une cavité 34 de protection de la ligne critique intérieure LCi.

Des moyens sont prévus pour faire passer le vantail 6v de la première porte 6 et le vantail 10v de la seconde porte 10 plaqué sur lui de l'état fermé à un état ouvert intermédiaire où les deux vantaux 6v et 10v sont écartés des ouvertures 4 et 8 et placés - et maintenus - dans la cavité 34 (figure 8).

Le déflecteur 25 définit la profondeur axiale de la cavité 34. Cette dimension axiale est supérieure et notamment est nettement supérieur, à l'encombrement axial du vantail 6v de la première porte 6 et même à l'encombrement axial de l'ensemble comprenant le vantail 6v de la première porte 6 et le vantail 10v de la seconde porte 10 plaqué sur le vantail 6v de la première porte 6.

Ainsi, la ligne critique intérieure LCi se trouve suffisamment profondément placée dans la cavité 34, ce qui assure la fonction de séparation remplie par le déflecteur 26.

Dans cette variante, il est prévu que les moyens porteurs 11a de la première porte 6 sont des moyens à rotation autour d'un axe 35 disposé sensiblement parallèlement à la face extérieure 5a de la bride 5 et orthogonalement à l'axe AA. Ainsi, on déplace de conserve le vantail 6v de la première porte 6 et le vantail 10v de la seconde porte 10 plaqué sur lui de l'état ouvert intermédiaire à l'état totalement ouvert.

La course de rotation des moyens porteurs 11a de la première porte 6 et du vantail 6v de la première porte 6 elle-même est telle que le vantail 6v de la première porte soit écarté de l'espace de communication 13. Par exemple, la course de rotation est de l'ordre d'un quart de tour. Selon une autre possibilité, cette course est de l'ordre d'un demi-tour. Avec cet agencement, il est possible de réaliser un espace d'écartement 12 de taille suffisamment importante entre l'espace de communication 13 et la ligne critique intérieure LCi lorsque la première porte 6 est à l'état ouvert.

L'axe 35 est écarté orthogonalement du plan de la première bride 5 vers l'intérieur de la première enceinte 1, de manière à permettre au déflecteur 25 d'être placé entre la partie centrale 33 des moyens porteurs 11a et la face intérieure 3b de la paroi 3 de la première enceinte 1, autour de la première ouverture 4. A cet effet, l'axe 35 peut être porté par une potence 36 saillant de la paroi 3 vers l'intérieur de l'enceinte 1 sur une longueur correspondant à la longueur axiale du déflecteur 25.

D'autre part, l'axe 35 est écarté latéralement (parallèlement à la paroi 3) du vantail 6v de la première porte 6 par une platine 15, de manière à espacer le déflecteur 25, le vantail 6v de la première porte 6 et la ligne critique intérieure LCi de l'espace de communication 13, lorsque la première porte 6 est à l'état ouvert. A cet effet, la potence 36 est déportée latéralement à l'écart de la première ouverture 4, de la première bride 5 et de la position du premier vantail 6v à l'état fermé.

Avec cet agencement, il est possible de réaliser un espace d'écartement 12 de taille suffisamment importante entre l'espace de communication 13 et la ligne critique intérieure LCi.

Si l'espacement latéral résultant de l'écartement et/ou du déplacement du vantail 6v de la première porte 6 est suffisamment important, cet espace d'écartement vient renforcer la séparation exercée par le déflecteur 25 entre l'espace de communication 13 et la ligne critique extérieure LCe.

On décrit maintenant plus spécialement de façon générale - et selon différentes variantes d'exécution - la seconde réalisation des moyens 25 intégrés à la première porte 6 et prenant la forme d'un espace d'écartement 12 de taille appropriée, et ce en référence aux figures 11 à 28,
Dans ces variantes, il est prévu des moyens 25 sous la forme d'un espace d'écartement 12 de taille appropriée, les moyens porteurs 11a et les moyens de manoeuvre de déplacement 11b de la première porte 6 étant agencés de manière qu'à l'état ouvert du premier vantail 6v, le premier vantail 6v soit substantiellement espacé au-delà de la limite 13b, 13c du premier espace d'entrée/sortie 13a, l'espace d'écartement 12 étant ainsi ménagé entre le premier espace d'entrée/sortie 13a et le premier vantail 6v à l'état ouvert.

Selon les réalisations envisageables, l'espace d'écartement 12 est situé au-delà de la limite latérale 13c de l'espace d'entrée/sortie 13a (figures 14, 15, 16C, 17C, 20, 26, 28) ou est situé au-delà de sa limite d'extrémité distale 13 b (figure 23).

On entend par « substantiellement espacé », le fait que le premier vantail 6v est éloigné et espacé à hors de la limite 13b, 13c du premier espace d'entrée/sortie 13a, et qu'entre toute zone du premier vantail 6v et la limite 13b, 13c la plus proche du premier espace d'entrée/sortie 13a, il existe un intervalle constitutif d'une distance e qui, à l'échelle de la taille E du premier espace d'entrée/sortie 13a comptée selon la direction de cet intervalle où est comptée cette distance e, non seulement n'est pas négligeable mais même est notable et appréciable.

Lorsque l'espace d'écartement 12 est situé au-delà de la limite latérale 13c du premier espace d'entrée/sortie 13a, la direction dans laquelle sont comptées e et E est une direction orthogonale à l'axe AA et parallèle à la première ouverture 4, la première bride 5 et la position du premier vantail 6v lorsqu'il se trouve à l'état fermé. Lorsque l'espace d'écartement 12 est situé au-delà de la limite d'extrémité distale 13 b du premier espace d'entrée/sortie 13a, la direction dans laquelle sont comptées e et E est la direction axiale AA, c'est-à-dire orthogonale à la première ouverture 4, la première bride 5 et la position du premier vantail 6v lorsqu'il se trouve à l'état fermé.

Dans les applications plus spécialement envisagées où la première ouverture 4 a un diamètre de l'ordre de 10 à 40 centimètres, E peut être du même ordre de grandeur (10 à 40 centimètres) et l'écartement e constitutif de l'espace d'écartement 12 peut être compris entre une valeur minimale de l'ordre de 3 centimètres et pouvant aller jusqu'à 40 centimètres.

Bien que l'écartement e ne soit pas directement dicté la taille E, il s'avère que l'écartement e peut être au moins égal au quart de E, ou même au moins égal à la moitié de E, ou même au moins égal à E.

Il est à noter que l'invention destinée au domaine biopharmaceutique permet d'envisager des ouvertures 4 et 8 et des vantaux 6v et 10v dont le diamètre est supérieur aux diamètres actuels, disons un diamètre supérieur à 40 centimètres.

Le mot « diamètre » doit être compris comme la plus grande largeur de la première ouverture 4, celle-ci n'étant pas obligatoirement circulaire.

On entend par « état ouvert du premier vantail 6v », l'état dans lequel est ménagé l'espace d'écartement 12 tel qu'il vient d'être défini ou un état ouvert primaire où est ménagé un espace d'écartement 12 primaire tel qu'il a été défini, le premier vantail 6v pouvant également se trouver dans un état ouvert final dans lequel est ménagé entre lui et l'espace d'entrée/sortie 13a un intervalle constitutif d'une distance plus grande que celle de l'état ouvert primaire.

Selon les réalisations envisageables, l'espace d'écartement 12 est un espace vide (figures 14, 16C, 20, 23, 26, 28) ou bien l'enceinte 1 comporte également une paroi de séparation 14 fixe ou mobile qui, à l'état ouvert du premier vantail 6v, est placée et s'étend, au moins pour partie, entre le premier vantail 6v et l'espace d'entrée/sortie 13a (figures 17A, 17B 17C).

Selon les réalisations envisageables, une telle paroi de séparation 14 est fixe (figures 17A, 17B 17C) ou elle est mobile.

Selon une réalisation envisageable, une telle paroi de séparation 14 peut être associée structurellement à la structure de la première enceinte 1, notamment à la première paroi 3, auquel cas la paroi de séparation peut être fixe (figures 17A, 17B 17C) et former avec la paroi 3 une cavité de protection 14a du premier vantail 6v à l'état ouvert - et donc du second vantail 10b - et donc également une cavité de protection de la ligne critique intérieure LCi dans cet état du premier vantail 6v et du second vantail 10v. Une telle cavité de protection 14a comporte une ouverture d'entrée/sortie par laquelle le premier vantail 6v et le second vantail 10v sont aptes à entrer dans ou à sortir de la cavité de protection 14 par glissement et translation dans leurs propre plans, telle qu'une fente.

Selon une autre réalisation envisageable, une telle paroi de séparation 14 peut être associée structurellement à la première porte 6 et/ou à ses moyens porteurs 11a ou de manoeuvre de déplacement 11b, auquel cas la paroi de séparation 14 est mobile. Par exemple, il peut être prévu un déflecteur annulaire intégré à la première porte 6, analogue au déflecteur 25 décrit précédemment en relation avec la première réalisation (barrière formant obstacle sous forme de déflecteur annulaire) et les figures 6 à 10.

Selon les réalisations représentées, le premier vantail 6v à l'état ouvert est disposé dans une position au moins sensiblement parallèle à la première ouverture 4, à la première bride 5 et au premier vantail 6v lorsqu'il se trouve à l'état fermé. Dans ce cas, le premier vantail 6v est disposé dans une position au moins sensiblement orthogonale à l'axe AA du premier espace d'entrée/sortie 13a.

Selon une autre réalisation non représentée, le premier vantail 6v à l'état ouvert est disposé dans une position au moins sensiblement orthogonale à la première ouverture 4, à la première bride 5 et au premier vantail 6v lorsqu'il se trouve à l'état fermé. Dans ce cas, le premier vantail 6v est disposé dans une position au moins sensiblement parallèle à l'axe AA du premier espace d'entrée/sortie 13a.

Selon la réalisation représentée sur la figure 23, le premier vantail 6v à l'état ouvert est disposé dans une position au moins sensiblement en regard de la première ouverture 4, de la première bride 5 et de la position du premier vantail 6v à l'état fermé. Cette réalisation correspond au cas où l'espace d'écartement 12 est situé au-delà de la limite d'extrémité distale 13 b du premier espace d'entrée/sortie 13a.

Selon les réalisations représentées sur les figures 15, 16C, 17C, 20, 26, 28, le premier vantail 6v à l'état ouvert est disposé dans une position latérale par rapport à la première ouverture 4, à la première bride 5 et au premier vantail 6v lorsqu'il se trouve à l'état fermé. Cette réalisation correspond au cas où l'espace d'écartement 12 est situé au-delà de la limite latérale 13c du premier espace d'entrée/sortie 13a.

Il est entendu que lorsque la première enceinte 1 est associée à une seconde enceinte 2, dans le cadre d'un dispositif de jonction étanche et d'un dispositif de transfert aseptique, le premier vantail 6v supporte le second vantail 10v, les deux vantaux 6v et 10v étant solidarisés plaqués l'un contre l'autre par leurs faces extérieures respectives 6a et 10a en contact.

Les moyens porteurs 11a et les moyens de manoeuvre de déplacement 11b de la première porte 6, de même que l'agencement et la cinématique de la première porte 6, notamment de son vantail 6a, peuvent faire l'objet de plusieurs réalisations différentes structurellement mais toutes ayant pour effet de faire en sorte qu'à l'état ouvert du premier vantail 6, celui-ci soit substantiellement espacé au-delà de la limite 13b, 13c du premier espace d'entrée/sortie 13, avec constitution de l'espace d'écartement 12.

De façon générale, les moyens porteurs 11a et les moyens de manoeuvre de déplacement 11b sont agencés pour être aptes à déplacer le premier vantail 6v entre ses états fermé et ouvert ou ouvert primaire, selon un mouvement comprenant un mouvement initial d'écartement du premier vantail 6v de la première bride 5.

Dans une réalisation, ce mouvement initial d'écartement est un mouvement au moins sensiblement de translation initiale le long d'un axe au moins sensiblement orthogonal à la première ouverture 4, à la première bride 5 et à la position du premier vantail 6v à l'état fermé (figures 13, 16B, 17B, 19, 22).

Dans une autre réalisation, ce mouvement initial d'écartement est un mouvement de rotation initiale autour d'un axe au moins sensiblement parallèle à la première ouverture 4, à la première bride 5 et à la position du premier vantail 6v à l'état fermé (figure 24).

Dans une autre réalisation, ce mouvement initial d'écartement est un mouvement au moins sensiblement de translation initiale du premier vantail selon un axe curviligne (figure 28).

De façon non moins générale, les moyens porteurs 11a et les moyens de manoeuvre de déplacement 11b sont agencés pour être aptes à déplacer le premier vantail 6v entre ses états fermé et ouvert ou ouvert primaire et ouvert final, selon un mouvement comprenant un mouvement initial d'écartement du premier vantail 6v de la première bride 5, comme il vient d'être indiqué, et au moins un mouvement ultérieur qui est un mouvement ultérieur de translation et/ou au moins un mouvement ultérieur de rotation.

Ce mouvement ultérieur de translation ou de rotation peut faire l'objet de plusieurs réalisations.

Dans une réalisation, l'axe de translation du mouvement ultérieur de translation est un axe au moins sensiblement rectiligne.

Par exemple, cet axe de translation peut être au moins sensiblement parallèle à la première ouverture 4, à la première bride 5 et à la position du premier vantail 6v à l'état fermé et sensiblement orthogonal à l'axe AA (figure 20). Ou, alternativement, cet axe de translation peut être sensiblement orthogonal à la première ouverture 4, à la première bride 5 et à la position du premier vantail 6v à l'état fermé et sensiblement parallèle à l'axe AA (figure 23).

Ou, selon une autre réalisation non représentée, cet axe de translation peut être non pas orthogonal ou parallèle à la première ouverture 4, à la première bride 5 et à la position du premier vantail 6v à l'état fermé ou parallèle ou orthogonal à l'axe AA, mais incliné par rapport à la première ouverture 4, à la première bride 5 et à la position du premier vantail 6v à l'état fermé et incliné par rapport à l'axe AA.

Dans une autre réalisation, l'axe de translation du mouvement ultérieur de translation est un axe curviligne (figures 27 et 28).

Dans une autre réalisation, le mouvement ultérieur est non pas une translation, mais une rotation autour d'un axe.

Par exemple, cet axe de rotation peut être au moins sensiblement parallèle à la première ouverture 4, à la première bride 5 et à la position du premier vantail 6v à l'état fermé et sensiblement orthogonal à l'axe AA (figures 24, 25, 26, 27, 28).

Ou, cet axe de rotation peut être au moins sensiblement orthogonal à la première ouverture 4, à la première bride 5 et à la position du premier vantail 6v à l'état fermé et sensiblement parallèle à l'axe AA (figures 13, 14, 16A, 16B, 16C, 17A, 17B, 17C).

La structure et l'agencement des moyens porteurs 11a et des moyens de manoeuvre de déplacement 11b sont adaptés à la cinématique recherchée.

Ainsi, les moyens porteurs 11a et les moyens de manoeuvre de déplacement 11b comprennent des moyens d'écartement initial du premier vantail 6v de la première bride 5 qui sont des moyens de translation le long d'un axe au moins sensiblement orthogonal à la première ouverture 4, à la première bride 5 et à la position du premier vantail 6v à l'état fermé (c'est-à-dire sensiblement orthogonal à l'axe AA), ou des moyens de rotation autour d'un axe au moins sensiblement parallèle à la première ouverture 4, à la première bride 5 et à la position du premier vantail 6v à l'état fermé(c'est-à-dire sensiblement orthogonal à l'axe AA), comme précédemment indiqué.

De même, les moyens porteurs 11a et les moyens de manoeuvre de déplacement 11b comprennent de tels moyens d'écartement initial du premier vantail 6v et de la première bride 5 et des moyens de déplacement ultérieur qui sont des moyens de translation et/ou des moyens de rotation, comme précédemment indiqué.

Le premier vantail 6v est prolongé latéralement en saillie, de façon au moins sensiblement coplanaire, par une ou plusieurs platines (ou bras ou appendice) 15 faisant partie des moyens porteurs 11a et permettant le déplacement du premier vantail 6v, suite à la mise en oeuvre des moyens de manoeuvre de déplacement 11b.

Selon les réalisations, la première paroi 3 comporte une ou plusieurs lumières traversantes 16 aptes à permettre et à assurer le passage étanche et aseptique des moyens porteurs 11a et/ou des moyens de manoeuvre de déplacement 11b de part et d'autre de la paroi 3, de manière que depuis l'extérieur de la première enceinte 1, il soit possible de commander le déplacement des moyens 11a et 11b.

On décrit maintenant plus spécialement une première famille des moyens 25 intégrés à la première porte 6 selon la seconde réalisation (espace d'écartement 12 de taille appropriée), et ce en référence aux figures 11 à 20.

On décrit maintenant plus spécialement une première réalisation de cette première famille de réalisation, en référence aux figures 11 à 17C.

Dans ce cas, les moyens porteurs 11a et les moyens de manoeuvre de déplacement 11b de la première porte 6 sont agencés pour être aptes à déplacer le premier vantail 6v à partir de son état fermé selon un mouvement comprenant un mouvement initial de translation le long d'un axe au moins sensiblement orthogonal à la première ouverture 4, à la première bride 5 et au premier vantail 6v lorsqu'il se trouve à l'état fermé (c'est-à-dire parallèle à l'axe AA), et ce afin d'écarter le premier vantail 6v de la première bride 5 comme il a été précédemment indiqué, et au moins un mouvement ultérieur de rotation autour d'un axe au moins sensiblement orthogonal à la première ouverture 4, à la première bride 5 et au premier vantail 6v lorsqu'il se trouve à l'état fermé (c'est-à-dire parallèle à l'axe AA) et ce afin d'amener le premier vantail 6v dans sa position à l'état ouvert ou ouvert primaire ou ouvert final.

Dans la réalisation de la figure 15, le mouvement de rotation est au moins sensiblement un demi-tour. Dans les réalisations des figures 16C et 17C, le mouvement de rotation est au moins sensiblement un quart de tour.

Dans cet état ouvert ou ouvert primaire ou ouvert final, le premier vantail 6v est disposé dans une position latérale par rapport à la première ouverture 4, à la première bride 5 et au premier vantail 6v lorsqu'il se trouve à l'état fermé, cette position étant au moins sensiblement orthogonale à l'axe AA, tandis que l'espace d'écartement 12 est situé au-delà de la limite latérale 13c du premier espace d'entrée/sortie 13.

Dans cette réalisation, les moyens porteurs 11a et les moyens de manoeuvre de déplacement 11b de la première porte 6 comprennent au moins un premier vérin 17 disposé selon un axe au moins sensiblement orthogonal à la première ouverture 4, à la première bride 5 et au premier vantail 6v lorsqu'il se trouve à l'état fermé et assurant le mouvement initial de translation et au moins un système de déplacement à rotation 18 selon un axe au moins sensiblement orthogonal à la première ouverture 4, à la première bride 5 et au premier vantail 6v lorsqu'il se trouve à l'état fermé (c'est-à-dire parallèle à l'axe AA).

Un tel système de déplacement à rotation 18 peut comprendre un arbre comportant une lumière profilée ayant une partie axiale et une partie inclinée sur l'axe de l'arbre, avec laquelle coopère un pion.

Dans la réalisation représentée, la course de mouvement initial de translation réalisée à l'aide du premier vérin 17 est celle juste nécessaire, aux jeux nécessaires près, pour permettre d'une part le mouvement ultérieur de rotation, sans que le premier vantail 6v et le second vantail 10v n'interfèrent avec la première paroi 3 de la première enceinte 1 sur sa face intérieure 3b et, d'autre part, que la face intérieure 10b de la seconde porte 10 (ou plus précisément du vantail 10v de la seconde porte 10) se trouve au voisinage de la face intérieure 3b de la première paroi 3, afin de ne pas occuper une partie utile de l'espace intérieur 1a de la première enceinte 1 et de faire en sorte que la ligne critique intérieure LCi de la première porte 6 ouverte soit située vers la face intérieure 3b de la première paroi 3.

Dans la réalisation représentée, la face extérieure 6a du premier vantail 6v dans son état ouvert ou ouvert primaire ou ouvert final est tournée vers et notamment proche de la face intérieure 3b de la première paroi 3 de la première enceinte 1. Ainsi, la face intérieure 10b du second vantail 10v dans son état ouvert ou ouvert primaire ou ouvert final est tournée vers et située à proximité, notamment immédiate, de la face intérieure 3b de la première paroi 3 de la première enceinte 1.

Dans cette réalisation, le premier vantail 6v de la première porte 6 est prolongé latéralement par une platine 15, laquelle est portée au moins sensiblement orthogonalement à l'extrémité de l'arbre, disposé selon un axe au moins sensiblement orthogonal à la première ouverture 4, à la première bride 5 et au premier vantail 6v lorsqu'il se trouve à l'état fermé (c'est-à-dire parallèle à l'axe AA).

Cet arbre traverse par ailleurs une lumière traversante 16 de la première paroi 3, où sont prévus la lumière profilée et le pion du système de déplacement à rotation 18.

Le premier vérin 17 agit sur l'arbre pour le faire coulisser le long de son axe.

L'arbre est déporté latéralement à l'écart de la première ouverture 4 et de la première bride 5. Il est d'autre part écarté latéralement (parallèlement à la première paroi 3) du premier vantail 6v de la première porte 6 du fait de la présence de la platine 15.

Avec une platine 15 de longueur suffisante et une course de rotation suffisante, il est possible de réaliser un espace d'écartement 12 de taille suffisamment importante, comme indiqué.

Selon une possibilité (figures 16A, 16B, 16C), les vantaux 6v et 10v des deux portes 6 et 10 à l'état ouvert sont simplement situés dans l'espace intérieur 1a de la première enceinte 1, suffisamment éloigné de l'espace d'entrée/sortie 13a, comme indiqué.

Selon une autre possibilité (figures 17A, 17B, 17C), il est prévu dans la première enceinte 1 une cavité de protection 14a des vantaux 6v et 10v des deux portes 6 et 10 à l'état ouvert, alors qu'ils sont plaqués l'un contre l'autre. Une telle cavité de protection 14a est ménagée entre la face intérieure 3b de la première paroi 3 et une paroi de séparation 14 disposée parallèlement et à l'écart d'elle. Une telle cavité de protection 14a comporte une ouverture d'entrée/sortie des deux vantaux 6v et 10v par glissement et translation dans leurs propres plans, telle qu'une fente. Avec une telle structure, la séparation d'écartement est renforcée par une séparation barrière.

On décrit maintenant plus spécialement une deuxième réalisation de cette première famille de réalisation, en référence aux figures 18 à 20,
Dans ce cas, les moyens porteurs 11a et les moyens de manoeuvre de déplacement 11b de la première porte 6 sont agencés pour être aptes à déplacer le premier vantail 6v à partir de son état fermé selon un mouvement comprenant un mouvement initial de translation comme dans le premier mode d'exécution précédemment décrit et au moins un mouvement ultérieur de translation le long d'un axe au moins sensiblement parallèle à la première ouverture 4, à la première bride 5 et au premier vantail 6v lorsqu'il se trouve à l'état fermé (c'est-à-dire orthogonal à l'axe AA) et ce afin d'amener le premier vantail 6v dans sa position à l'état ouvert ou ouvert primaire ou ouvert final.

Dans cet état ouvert ou ouvert primaire ou ouvert final, le premier vantail 6v est disposé comme dans la première réalisation précédemment décrite.

Dans cette réalisation, les moyens porteurs 11a et les moyens de manoeuvre de déplacement 11b de la première porte 6 comprennent au moins le premier vérin 17 disposé selon un axe au moins sensiblement orthogonal à la première ouverture 4, à la première bride 5 et au premier vantail 6v lorsqu'il se trouve à l'état fermé (c'est-à-dire parallèle à l'axe AA) et assurant le mouvement initial de translation et au moins un second vérin 19 selon un axe au moins sensiblement parallèle à la première ouverture 4, à la première bride 5 et au premier vantail 6v lorsqu'il se trouve à l'état fermé (c'est-à-dire orthogonal à l'axe AA).

Dans la réalisation représentée, la course de mouvement initial de translation réalisée à l'aide du premier vérin 17 est comme celle de la première réalisation précédemment décrite.

Dans la réalisation représentée, la face extérieure 6a du premier vantail 6v dans son état ouvert ou ouvert primaire ou ouvert final est disposée comme dans la première réalisation précédemment décrite. De même pour les faces du second vantail 10v.

Dans cette réalisation, le premier vantail 6v de la première porte 6 est également prolongé latéralement par au moins une platine 15, laquelle est portée au moins sensiblement orthogonalement par le premier vérin 17 traversant une lumière traversante 16 de la première paroi 3.

Le premier vérin 17 est porté par le second vérin 19.

On décrit maintenant plus spécialement une deuxième famille des moyens 25 intégrés à la première porte 6 selon la seconde réalisation (espace d'écartement 12 de taille appropriée), et ce en référence aux figures 21 à 23.

Dans ce cas, les moyens porteurs 11a et les moyens de manoeuvre de déplacement 11b de la première porte 6 sont agencés pour être aptes à déplacer le premier vantail 6v à partir de son état fermé selon un mouvement comprenant au moins un mouvement de translation le long d'un axe au moins sensiblement orthogonal à la première ouverture 4, à la première bride 5 et au premier vantail 6v lorsqu'il se trouve à l'état fermé (c'est-à-dire parallèle à l'axe AA), et ce afin d'écarter le premier vantail 6v de la première bride 5 puis d'amener le premier vantail 6v dans sa position à l'état ouvert ou ouvert primaire ou ouvert final.

Dans cet état ouvert ou ouvert primaire ou ouvert final, le premier vantail 6v est disposé dans une position au moins sensiblement en regard de la première ouverture 4, de la première bride 5 et du premier vantail 6v lorsqu'il se trouve à l'état fermé, cette position étant au moins sensiblement orthogonale à l'axe AA, tandis que l'espace d'écartement 12 est situé au-delà de la limite d'extrémité distale 13b du premier espace d'entrée/sortie 13a.

Dans cette réalisation les moyens porteurs 11a et les moyens de manoeuvre de déplacement 11b de la première porte 6 comprennent au moins un vérin 20 disposé selon un axe au moins sensiblement orthogonal à la première ouverture 4, à la première bride 5 et au premier vantail 6v lorsqu'il se trouve à l'état fermé (c'est-à-dire parallèle à l'axe AA) et assurant tant le mouvement initial de translation et que le mouvement ultérieur de translation.

La course de mouvement de translation est celle nécessaire à la réalisation de l'espace d'écartement 12.

Dans la réalisation représentée, la face extérieure 6a du premier vantail 6v dans son état ouvert ou ouvert primaire ou ouvert final est tournée vers et éloignée de la première ouverture 4, de la première bride 5 et du premier vantail 6v lorsqu'il se trouve à l'état fermé. Ainsi, la face intérieure 10b du second vantail 10v dans son état ouvert ou ouvert primaire ou ouvert final est tournée vers et elle-aussi éloignée de la première ouverture 4, de la première bride 5 et du premier vantail 6v lorsqu'il se trouve à l'état fermé.

Dans la réalisation représentée, le premier vantail 6v de la première porte 6 est prolongé latéralement par une platine 15, laquelle est portée au moins sensiblement orthogonalement à l'extrémité du vérin 20. Préférentiellement, il est prévu deux platines 15 diamétralement opposées et deux vérins 20.

On décrit maintenant plus spécialement une troisième famille des moyens 25 intégrés à la première porte 6 selon la seconde réalisation (espace d'écartement 12 de taille appropriée), et ce en référence aux figures 24 à 26.

Dans ce cas, les moyens porteurs 11a et les moyens de manoeuvre de déplacement 11b de la première porte 6 sont agencés pour être aptes à déplacer le premier vantail 6v à partir de son état fermé selon un mouvement de rotation autour d'un axe au moins sensiblement parallèle à la première ouverture 4, à la première bride 5 et au premier vantail 6v lorsqu'il se trouve à l'état fermé (c'est-à-dire orthogonal à l'axe AA), et ce afin d'écarter le premier vantail 6v de la première bride 5 puis d'amener le premier vantail 6v dans sa position à l'état ouvert ou ouvert primaire ou ouvert final.

Dans cet état ouvert ou ouvert primaire ou ouvert final, le premier vantail 6v est disposé dans une position latérale par rapport à la première ouverture 4, à la première bride 5 et au premier vantail 6v lorsqu'il se trouve à l'état fermé, cette position étant au moins sensiblement orthogonale à l'axe AA, tandis que l'espace d'écartement 12 est situé au-delà de la limite latérale 13c du premier espace d'entrée/sortie 13a.

Dans cette réalisation les moyens porteurs 11a et les moyens de manoeuvre de déplacement 11b de la première porte 6 comprennent au moins un système de déplacement à rotation 21 selon un axe 21a au moins sensiblement parallèle à la première ouverture 4, à la première bride 5 et au premier vantail 6v lorsqu'il se trouve à l'état fermé (c'est-à-dire orthogonal à l'axe AA) et assurant tant le mouvement initial que le mouvement ultérieur de rotation.

Le système de déplacement à rotation 21 comprend une charnière d'axe 21a et un moyen d'entrainement à rotation autour de l'axe 21a.

La course de mouvement de rotation est voisine de d'un demi-tour.

Dans la réalisation représentée, la face extérieure 6a du premier vantail 6v dans son état ouvert ou ouvert primaire ou ouvert final est tournée vers l'opposé de la face intérieure 3b de la première paroi 3 de la première enceinte 1. Ainsi, la face intérieure 10b du second vantail 10v dans son état ouvert ou ouvert primaire ou ouvert final est tournée vers et située à proximité, notamment immédiate, de la face intérieure 3b de la première paroi 3 de la première enceinte 1.

Dans la réalisation représentée, le premier vantail 6v de la première porte 6 est prolongé latéralement par une platine 15, laquelle est portée par l'articulation du système de déplacement à rotation 21.

Avec une platine 15 de longueur suffisante, il est possible de réaliser un espace d'écartement 12 de taille suffisamment importante, comme indiqué.

On décrit maintenant plus spécialement une quatrième famille des moyens 25 intégrés à la première porte 6 selon la seconde réalisation (espace d'écartement 12 de taille appropriée), et ce en référence aux figures 27 et 28.

Dans ce cas, les moyens porteurs 11a et les moyens de manoeuvre de déplacement 11b de la première porte 6 sont agencés pour être aptes à déplacer le vantail à partir de son état fermé selon un mouvement comprenant un mouvement de translation le long d'un axe curviligne 22 correspondant au moins sensiblement à un arc de cercle d'axe 23 au moins sensiblement parallèle à la première ouverture 4, à la première bride 5 et au premier vantail 6v lorsqu'il se trouve à l'état fermé (c'est-à-dire orthogonal à l'axe AA).

Dans cette réalisation, les moyens porteurs 11a et les moyens de manoeuvre de déplacement 11b de la première porte 6 comprennent au moins un système à parallélogramme déformable 24 selon l'axe 23 déporté latéralement par rapport à la première ouverture 4, à la première bride 5 et au premier vantail 6v lorsqu'il se trouve à l'état fermé.

Par exemple, la course de mouvement de rotation du parallélogramme déformable 24 est de l'ordre d'un demi-tour.

Dans la réalisation représentée, la face extérieure 6a du premier vantail 6v dans son état ouvert ou ouvert primaire ou ouvert final est tournée vers la face intérieure 3b de la première paroi 3 de la première enceinte 1. Ainsi, la face intérieure 10b du second vantail 10v dans son état ouvert ou ouvert primaire ou ouvert final est tournée vers et située à proximité, notamment immédiate, de la face intérieure 3b de la première paroi 3 de la première enceinte 1.

Avec un axe 23 suffisamment déporté latéralement par rapport à la première ouverture 4, à la première bride 5 et au premier vantail 6v lorsqu'il se trouve à l'état fermé, il est possible de réaliser un espace d'écartement 12 de taille suffisamment importante, comme indiqué.

## Revendications

1. Dispositif de jonction étanche entre une première enceinte (1) et une seconde enceinte isolées du milieu extérieur, tel que :
▪ faisant partie d'une première enceinte (1) :
∘ une structure incluant une première paroi (3) limitant un premier espace intérieur (1a) est pourvue d'une première ouverture (4) limitée par une première bride annulaire (5);
∘ une première porte (6) supportée par la structure par l'intermédiaire de moyens porteurs (11a) mobiles ou déformables, dont le vantail (6v) est agencé et monté de façon apte à pouvoir être déplacé pour se trouver soit à l'état fermé où il coopère avec la première bride (5) en fermant la première ouverture (4) soit à l'état ouvert où il est dégagé de la première bride (5) et placé dans l'espace intérieur (1a) en ouvrant la première ouverture (4);
▪ faisant partie d'une seconde enceinte (2) :
∘ une seconde paroi (7) est pourvue d'une seconde ouverture (8) limitée par une seconde bride annulaire (9);
∘ une seconde porte (10) dont le vantail (10v) est monté à déplacement, apte à se trouver à l'état fermé ou à l'état ouvert où, respectivement, le second vantail (10v) ferme ou ouvre la seconde ouverture (8);
▪ la première bride (5) et la seconde bride (9) sont complémentaires et aptes à être maintenues de façon amovible plaquées l'une contre l'autre par leurs faces extérieures (5a, 6a) par des moyens de maintien amovible ;
▪ le premier vantail (6v) et le second vantail (10v) sont complémentaires et aptes à être plaqués l'un contre l'autre de façon hermétique par leurs faces extérieures (6a, 10a) ;
▪ des moyens de solidarisation amovible sont aptes à maintenir les deux vantaux (6v et 10v) de façon amovible plaqués l'un contre l'autre de façon hermétique par leurs faces extérieures (6a et 10a);
▪ des moyens de manoeuvre de déplacement sont aptes à déplacer le premier vantail (6v) entre ses états fermé et ouvert, et des moyens de commande sont aptes à commander les moyens de manoeuvre de déplacement (11b);
▪ de telle sorte que lorsque la première porte (6) et la seconde porte (10), respectivement leurs vantaux (6v et 10v), sont à l'état ouvert, la première enceinte (1) et la seconde enceinte (2) communiquent entre elles par leurs ouvertures respectives (4, 8) à l'état ouvert, un espace de communication (13) constitué d'un espace d'entrée/sortie (13a) dans la première enceinte (1) et d'un espace d'entrée/sortie dans la seconde enceinte (2) étant ménagé entre les deux enceintes (1, 2) permettant de faire passer de l'une à l'autre un certain contenu ;
▪ une ligne critique annulaire intérieure (LCi) de risque de contamination existe sur le premier vantail (6v) de la première porte (6) et une ligne critique annulaire extérieure (LCe) de risque de contamination existe sur la seconde bride (9);
▪ et des moyens de protection contre les risques de contamination pour la ligne critique extérieure ;
**caractérisé par le fait qu'**il comporte des moyens (25) structurellement intégrés à la première porte (6) et des moyens (26) structurellement intégrés à la seconde bride (9), aptes - lorsque la première porte (6) et la seconde porte (10), respectivement leurs vantaux (6v et 10v), sont à l'état ouvert - à former une séparation (25, 26) entre l'espace de communication (13) et la ligne critique annulaire intérieure (LCi) et la ligne critique annulaire extérieure (LCe),
et **caractérisé par le fait que** les moyens (25, 26) structurellement intégrés aptes à former une séparation (25, 26) se présentent sous la forme d'un déflecteur annulaire de taille appropriée placé entre l'espace de communication (13) et la ligne critique, cette dernière étant ainsi normalement non atteignable lors du passage dans l'espace de communication (13).

2. Dispositif de jonction étanche entre deux enceintes (1, 2) isolées du milieu extérieur selon la revendication 1, **caractérisé par le fait que** les moyens (25, 26) structurellement intégrés aptes à former une séparation (25, 26) constituent des moyens de protection contre toute contamination à l'endroit de la ligne critique annulaire intérieure (LCi) et/ou la ligne critique annulaire extérieure (LCe), et sont structurellement intégrés en totalité à la première porte (6) et/ou à la seconde bride (9).

3. Dispositif de jonction étanche entre deux enceintes (1, 2) isolées du milieu extérieur selon la revendication 1 ou 2, **caractérisé par le fait que** les moyens (26) structurellement intégrés aptes à former une séparation (26) se présentent sous la forme d'un déflecteur annulaire (26) intégré à la seconde bride (9), limitant la seconde ouverture (8), saillant du plan frontal libre de la seconde bride (9) formant interface avec la première bride (5), en particulier un .déflecteur annulaire (26) de forme générale cylindrique ou avec un bord distal libre (27) légèrement évasé.

4. Dispositif de jonction étanche entre deux enceintes (1, 2) isolées du milieu extérieur selon la revendication 3, **caractérisé par le fait que** le déflecteur annulaire (26) forme avec la partie périphérique extérieure de la seconde bride (9) une cavité annulaire (28) dans le fond ou au voisinage du fond de laquelle se trouve la ligne critique extérieure LCe.

5. Dispositif de jonction étanche entre deux enceintes (1, 2) isolées du milieu extérieur selon l'une quelconque des revendications 3 et 4, **caractérisé par le fait que** le vantail (10v) de la seconde porte (10) comprend une rainure annulaire (29) s'ouvrant vers l'intérieur de la seconde enceinte (2), apte à recevoir le déflecteur (26) de la seconde bride (9) et une partie périphérique annulaire renflée (30) apte à comprendre vers l'intérieur la rainure annulaire (29) et à former vers l'extérieur, une partie en forme de tenon apte à être logée dans une partie complémentaire en forme de mortaise (31) ménagée sur la face extérieure (6a) du vantail (6v) de la première porte (6).

6. Dispositif de jonction étanche entre deux enceintes (1, 2) isolées du milieu extérieur selon la revendication 1 ou 2, **caractérisé par le fait que** les moyens (25) structurellement intégrés aptes à former une séparation (25) se présentent sous la forme d'un déflecteur annulaire (25) intégré à la première porte (6), porté par ou faisant partie des moyens porteurs (11a) ou des moyens de manoeuvre de déplacement (11b) de la première porte (6) ou du vantail (6v) de la première porte (6) à l'état ouvert et disposé autour de la première porte (6) en particulier un déflecteur annulaire (25) ayant une forme générale cylindrique.

7. Dispositif de jonction étanche entre deux enceintes (1, 2) isolées du milieu extérieur selon la revendication 6, **caractérisé par le fait que** le déflecteur annulaire (25) forme avec une partie centrale (33) des moyens porteurs (11a) ou des moyens de manoeuvre de déplacement (11b) de la première porte (6), une cavité de protection (34) de la ligne critique intérieure LCi.

8. Dispositif de jonction étanche entre deux enceintes (1, 2) isolées du milieu extérieur selon la revendication 7, **caractérisé par le fait que** le déflecteur annulaire (25) a une dimension axiale supérieure, notamment nettement supérieure, à l'encombrement axial du vantail (6v) de la première porte (6), en particulier nettement supérieure, à l'encombrement axial de l'ensemble comprenant le vantail (6v) de la première porte (6) et le vantail (10v) de la seconde porte (10) plaqué sur le vantail (6v) de la première porte (6).

9. Dispositif de jonction étanche entre deux enceintes (1, 2) isolées du milieu extérieur selon l'une quelconque des revendications 7 et 8, **caractérisé par le fait que** les moyens porteurs (11a) et les moyens de manoeuvre de déplacement de la première porte (6) sont à rotation autour d'un axe (35) sensiblement parallèle à la première ouverture (4), à la première bride (5) et à la position du premier vantail lorsqu'il est à l'état fermé, en particulier écarté dans l'espace intérieur (1a) de la première enceinte (1), de manière à permettre au déflecteur (25) - à l'état ouvert du premier vantail (6v) - d'être placé entre la partie centrale (33) des moyens porteurs (11a) ou des moyens de manoeuvre de déplacement (11b) et la face intérieure (3b) de la première enceinte (1) autour de la première ouverture (4), et plus spécialement écarté latéralement du vantail (6v) de la première porte (6), de manière à espacer le déflecteur (25), le vantail (6v) de la première porte (6) et la ligne critique intérieure LCi de l'espace de communication (13) lorsque le premier vantail (6v) est à l'état ouvert.

10. Dispositif de jonction étanche entre deux enceintes (1, 2) isolées du milieu extérieur selon l'une quelconque des revendications 1 à 9, **caractérisé par le fait que** les moyens porteurs (11a) et les moyens de manoeuvre de déplacement (11b) de la première porte (6) sont agencés pour être aptes à déplacer le premier vantail (6v) entre ses états fermé et ouvert ou ouvert primaire, selon un mouvement comprenant un mouvement initial d'écartement du premier vantail (6v) de la première bride (5) qui est un mouvement au moins sensiblement de translation initiale le long d'un axe au moins sensiblement orthogonal à la première ouverture (4), à la première bride (5) et à la position du premier vantail (6v) à l'état fermé, ou un mouvement de rotation initiale autour d'un axe au moins sensiblement parallèle à la première ouverture (4), à la première bride (5) et à la position du premier vantail (6v) à l'état fermé.

11. Procédé de mise en oeuvre d'un dispositif de jonction étanche entre deux enceintes (1, 2) isolées du milieu extérieur selon l'une quelconque des revendications 1 à 10, **caractérisé par** les étapes opératoires successives suivantes :
▪ on dispose d'une première enceinte (1) dont la première porte (6) comportant un premier vantail (6v) est à l'état fermé et d'une seconde enceinte (2) dont la seconde porte (10) comportant un second vantail (10v) est à l'état fermé ;
▪ on amène les deux enceintes (1, 2) à se trouver à proximité l'une de l'autre et on plaque la première bride (5) et la seconde bride (9) l'une contre l'autre de façon hermétique par leurs faces extérieures et on amène le premier vantail (6v) de la première porte (6) et le second vantail (10v) de la seconde porte (10) à être plaqués l'une contre l'autre de façon hermétique ;
▪ on solidarise la première bride (5) et la seconde bride (9) et les deux vantaux (6v et 10v) et on manoeuvre le premier vantail (6v) pour le déplacer et l'amener à l'état ouvert et ainsi amener également le second vantail (10v) à l'état ouvert, de telle sorte que la première enceinte (1) et la seconde enceinte (2) communiquent entre elles par leurs ouvertures respectives à l'état ouvert, un espace de communication (13) étant ménagé entre les deux enceintes (1, 2) permettant de faire passer entre elles un certain contenu ;
**caractérisé par le fait que** lorsque le premier vantail (6v) de la première porte (6) et le second vantail (10v) de la seconde porte (10) sont à l'état ouvert, on met en oeuvre les moyens structurellement intégrés à la première porte (6) et/ou des moyens structurellement intégrés à la seconde bride (9) et on forme une séparation (25, 26) entre l'espace de communication (13) et la ligne critique annulaire intérieure (LCi) et la ligne critique annulaire extérieure (LCe) du dispositif de jonction étanche.

12. Première enceinte (1), spécialement destinée adaptée à être associée à un dispositif de jonction étanche avec une seconde enceinte (2), comportant :
▪ une structure incluant une paroi (3) fermée limitant un espace intérieur (1a),
▪ au moins une ouverture (4) ménagée dans la paroi (3) et limitée par une première bride (5) annulaire dont la face extérieure (5a) est apte à assurer le plaquage hermétique sur elle-même de la face extérieure (9a) d'une seconde bride (9) complémentaire appartenant à la seconde enceinte (2),
▪ des moyens de maintien amovible, associés au moins pour partie à la première bride (5), aptes à maintenir de façon amovible la première bride (5) et la seconde bride (9) plaquées l'une contre l'autre par leurs faces extérieures (5a et 9a),
▪ une première porte (6) supportée par la structure par l'intermédiaire de moyens porteurs (11a) mobiles ou déformables, dont le premier vantail (6v) est agencé et monté de façon apte à pouvoir être déplacé pour se trouver soit à l'état fermé où il coopère avec la première bride (5) en fermant la première ouverture (4) soit à l'état ouvert où il est dégagé de la première bride (5) et placé dans l'espace intérieur (1a) en ouvrant la première ouverture (4), et dont la face extérieure (6a) est apte à assurer le plaquage hermétique sur elle-même de la face extérieure (10a) du vantail (10v) d'une seconde porte (10) complémentaire appartenant à la seconde enceinte (2),
▪ des moyens de solidarisation amovible associés au moins pour partie à la première porte (6), aptes à maintenir de façon amovible le premier vantail (6v) et le second vantail (10v) plaqués l'un contre l'autre par leurs faces extérieures (6a et 10a),
▪ des moyens de manoeuvre de déplacement (11b) aptes à déplacer le premier vantail (6v) entre ses états fermé et ouvert, et des moyens de commande des moyens de manoeuvre de déplacement (11b),
et, lorsque le premier vantail (6v) est à l'état ouvert, un premier espace d'entrée/sortie (13a) dans/de l'espace intérieur (1a), en forme générale de tronc de cylindre, de cône ou de pyramide, s'étendant dans l'espace intérieur au moins sensiblement axialement à partir de la première ouverture (4) et de la première bride (5), ce premier espace d'entrée/sortie (13a) faisant partie d'un espace de communication entre les deux enceintes associées et étant apte à permettre de faire passer un certain contenu dans/hors de l'espace intérieur, de l'une à l'autre des deux enceintes,
▪ apte à être joint à la seconde enceinte (2) par un dispositif de jonction étanche selon l'une quelconque des revendications 1 à 10,
▪ et comportant des moyens structurellement intégrés à la première porte (6) aptes lorsqu'elle est à l'état ouvert à former une séparation (25) entre l'espace de communication (13) et la ligne critique annulaire intérieure (LCi),
et **caractérisée par le fait que** les moyens (25) structurellement intégrés aptes à former une séparation (25) se présentent sous la forme d'un déflecteur annulaire de taille appropriée placé entre l'espace de communication (13) et la ligne critique, cette dernière étant ainsi normalement non atteignable lors du passage dans l'espace de communication (13).

13. Seconde enceinte (2), spécialement destinée à faire partie avec une première enceinte (1) d'un dispositif de transfert étanche entre les deux enceintes (1, 2),
▪ comportant :
∘ une seconde paroi (7) pourvue d'une seconde ouverture (8) limitée par une seconde bride annulaire (9),
∘ une seconde porte (10) dont le vantail (10v) est monté à déplacement, apte à se trouver à l'état fermé ou à l'état ouvert où, respectivement, le second vantail (10v) ferme ou ouvre la seconde ouverture (8),
▪ apte à être joint à la première enceinte (1) par un dispositif de jonction étanche selon l'une quelconque des revendications 1 à 10,
▪ et comportant des moyens (26) structurellement intégrés à la seconde bride (9) aptes lorsque la seconde porte (10), respectivement le second vantail (10v), est à l'état ouvert à former une séparation (26) entre l'espace de communication (13) et la ligne critique annulaire extérieure (LCe),
et **caractérisée par le fait que** les moyens (26) structurellement intégrés aptes à former une séparation (26) se présentent sous la forme d'un déflecteur annulaire de taille appropriée placé entre l'espace de communication (13) et la ligne critique, cette dernière étant ainsi normalement non atteignable lors du passage dans l'espace de communication (13).

14. Dispositif de transfert étanche entre une première enceinte (1) selon la revendication 12 et une seconde enceinte (2) selon la revendication 13, comportant un dispositif de jonction étanche entre les deux enceintes (1, 2) pourvu de moyens (25) structurellement intégrés à la première porte (6) et/ou des moyens (26) structurellement intégrés à la seconde bride (9), aptes - lorsque la première porte (6) et la seconde porte (10), respectivement les vantaux (6v et 10v) des portes (6 et 10) sont à l'état ouvert - à former une séparation (25, 26) entre l'espace de communication (13) et la ligne critique annulaire intérieure (LCi) et/ou la ligne critique annulaire extérieure (LCe).

## Patentansprüche

1. Vorrichtung zur dichten Verbindung zwischen einem ersten Gefäß (1) und einem zweiten Gefäß, die beide von der Außenumgebung isoliert sind, etwa:
• als Teil eines ersten Gefäßes (1)
∘ eine Struktur, die eine erste Wand (3), welche einen ersten Innenraum (1a) begrenzt, umfasst und eine erste Öffnung (4) aufweist, die durch einen ersten Ringflansch (5) begrenzt ist;
∘ eine erste Tür (6), die über bewegliche oder verformbare Trägermittel (11a) auf der Struktur gelagert ist und deren Türflügel (6v) derart ausgebildet und angebracht ist, dass er bewegt werden kann, um sich entweder im geschlossenen Zustand, in dem er mit dem ersten Flansch (5) zusammenwirkt, wobei er die erste Öffnung (4) verschließt, oder im offenen Zustand, in dem er vom ersten Flansch (5) gelöst und im Innenraum (1a) angeordnet ist, wodurch er die erste Öffnung (4) öffnet, zu befinden;
• als Teil eines zweiten Gefäßes (2):
∘ eine zweite Wand (7) eine zweite Öffnung (8) aufweist, welche durch einen zweiten Ringflansch (9) begrenzt ist;
∘ eine zweite Tür (10), deren Türflügel (10v) bewegbar angebracht und geeignet ist, sich im geschlossenen oder im offenen Zustand, in dem der zweite Türflügel (10v) die zweite Öffnung (8) verschließt bzw. öffnet, zu befinden;
• wobei der erste Flansch (5) und der zweite Flansch (9) komplementär zueinander sind und durch Mittel zum lösbaren Halten lösbar gehalten werden können, wobei ihre Außenflächen (5a, 6a) gegeneinandergedrückt sind;
• wobei der erste Türflügel (6v) und der zweite Türflügel (10v) komplementär zueinander sind und über ihre Außenflächen (6a, 10a) dichtend gegeneinandergedrückt sein können;
• wobei Mittel zur lösbaren Verbindung geeignet sind, die zwei Türflügel (6v und 10v) auf lösbare Weise über ihre Außenflächen (6a, 10a) dichtend gegeneinandergedrückt zu halten;
• wobei Bewegungsbetätigungsmittel geeignet sind, den ersten Türflügel (6v) zwischen seinem geschlossenen und seinem offenen Zustand zu bewegen, und Steuerungsmittel geeignet sind, die Bewegungsbetätigungsmittel (11b) zu steuern;
• so dass, wenn die erste Tür (6) und die zweite Tür (10) bzw. die entsprechenden Türflügel (6v und 10v) sich im offenen Zustand befinden, das erste Gefäß (1) und das zweite Gefäß (2) über ihre im offenen Zustand befindlichen entsprechenden Öffnungen (4, 8) miteinander kommunizieren, wobei zwischen den zwei Gefäßen (1, 2) ein Kommunikationsbereich (13), der aus einem Eintritts-/Austrittsbereich (13a) im ersten Gefäß (1) und einem Eintritts-/Austrittsbereich im zweiten Gefäß (2) besteht, definiert ist, der das Hindurchtreten eines bestimmten Inhalts vom einen zum anderen ermöglicht;
• wobei auf dem ersten Türflügel (6v) der ersten Tür (6) eine innere ringförmige kritische Kontaminationsrisikolinie (LCi) vorliegt und auf dem zweiten Flansch (9) eine äußere ringförmige kritische Kontaminationsrisikolinie (LCe) vorliegt;
• und Mittel für den Schutz vor Kontaminationsrisiken für die äußere kritische Linie; **dadurch gekennzeichnet, dass** die Vorrichtung Mittel (25), die strukturell in die erste Tür (6) integriert sind, und Mittel (26), die strukturell in den zweiten Flansch (9) integriert sind, umfasst, die geeignet sind, einen Trennabstand (25, 26) zwischen dem Kommunikationsbereich (13) und der inneren ringförmigen kritischen Linie (LCi) und der äußeren ringförmigen kritischen Linie (LCe) auszubilden, wenn die erste Tür (6) und die zweite Tür (10) bzw. die entsprechenden Türflügel (6v und 10v) sich im offenen Zustand befinden,
und **dadurch gekennzeichnet, dass** die strukturell integrierten Mittel (25, 26), die geeignet sind, einen Trennabstand (25, 26) auszubilden, die Form eines ringförmigen Ablenkelements mit geeigneten Abmessungen aufweisen, das zwischen dem Kommunikationsbereich (13) und der kritischen Linie angeordnet ist, wodurch die kritische Linie beim Hindurchtreten in den Kommunikationsbereich (13) normalerweise nicht erreichbar ist.

2. Vorrichtung zur dichten Verbindung zwischen zwei Gefäßen (1, 2), die von der Außenumgebung isoliert sind, nach Anspruch 1, **dadurch gekennzeichnet, dass** die strukturell integrierten Mittel (25, 26), die geeignet sind, einen Trennabstand (25, 26) auszubilden, Mittel zum Schutz gegen jegliche Kontamination auf der inneren ringförmigen kritischen Linie (LCi) und/oder der äußeren ringförmigen kritischen Linie (LCe) bilden und in ihrer Gesamtheit strukturell in die erste Tür (6) und/oder den zweiten Flansch (9) integriert sind.

3. Vorrichtung zur dichten Verbindung zwischen zwei Gefäßen (1, 2), die von der Außenumgebung isoliert sind, nach Anspruch 1 oder 2, **dadurch gekennzeichnet, dass** die strukturell integrierten Mittel (26), die geeignet sind, einen Trennabstand (26) auszubilden, die Form eines ringförmigen Ablenkelements (26) aufweisen, das in den zweiten Flansch (9) integriert ist, die zweite Öffnung (8) begrenzt, von der freien Stirnebene des zweiten Flanschs (9), die eine Grenzfläche mit dem ersten Flansch (5) ausbildet, vorsteht, insbesondere die eines ringförmigen Ablenkelements (26), das eine im Allgemeinen zylindrische Form oder einen leicht erweiterten freien distalen Rand (27) aufweist.

4. Vorrichtung zur dichten Verbindung zwischen zwei Gefäßen (1, 2), die von der Außenumgebung isoliert sind, nach Anspruch 3, **dadurch gekennzeichnet, dass** das ringförmige Ablenkelement (26) mit dem äußeren Umfangsteil des zweiten Flanschs (9) einen ringförmigen Hohlraum (28) ausbildet, wobei die äußere kritische Linie LCe auf dessen Boden oder nahe dessen Boden liegt.

5. Vorrichtung zur dichten Verbindung zwischen zwei Gefäßen (1, 2), die von der Außenumgebung isoliert sind, nach Anspruch 3 oder 4, **dadurch gekennzeichnet, dass** der Türflügel (10v) der zweiten Tür (10) eine ringförmige Nut (29), die sich zum Inneren des zweiten Gefäßes (2) hin öffnet und geeignet ist, das Ablenkelement (26) des zweiten Flanschs (9) aufzunehmen, sowie einen aufgeblähten ringförmigen Umfangsteil (30) umfasst, der geeignet ist, nach innen hin die ringförmige Nut (29) zu umfassen und nach außen hin einen zapfenförmigen Teil auszubilden, der in einem komplementären Teil untergebracht sein kann, der die Form eines Zapfenlochs (31) aufweist, das auf der Außenfläche (6a) des Türflügels (6v) der ersten Tür (6) angeordnet ist.

6. Vorrichtung zur dichten Verbindung zwischen zwei Gefäßen (1, 2), die von der Außenumgebung isoliert sind, nach Anspruch 1 oder 2, **dadurch gekennzeichnet, dass** die strukturell integrierten Mittel (25), die geeignet sind, einen Trennabstand (25) auszubilden, die Form eines ringförmigen Ablenkelements (25) aufweisen, das in die erste Tür (6) integriert und von den Trägermitteln (11a) oder den Bewegungsbetätigungsmitteln (11b) der ersten Tür (6) oder des Türflügels (6v) der ersten Tür (6), wenn diese(r) sich im offenen Zustand befindet, getragen wird oder Teil davon ist und um die erste Tür (6) herum angeordnet ist, insbesondere die eines Ablenkelements (25), das eine im Allgemeinen zylindrische Form aufweist.

7. Vorrichtung zur dichten Verbindung zwischen zwei Gefäßen (1, 2), die von der Außenumgebung isoliert sind, nach Anspruch 6, **dadurch gekennzeichnet, dass** das ringförmige Ablenkelement (25) mit einem Mittelteil (33) der Trägermittel (11a) oder der Bewegungsbetätigungsmittel (11b) der ersten Tür (6) einen Hohlraum (34) zum Schutz der inneren kritischen Linie LCi ausbildet.

8. Vorrichtung zur dichten Verbindung zwischen zwei Gefäßen (1, 2), die von der Außenumgebung isoliert sind, nach Anspruch 7, **dadurch gekennzeichnet, dass** das ringförmige Ablenkelement (25) eine axiale Dimension aufweist, die größer, insbesondere deutlich größer ist als die Axialerstreckung des Türflügels (6v) der ersten Tür (6), insbesondere deutlich größer als die Axialerstreckung der Gesamtheit des Türflügels (6v) der ersten Tür (6) und des Türflügels (10v) der zweiten Tür (10), der auf den Türflügel (6v) der ersten Tür (6) gedrückt ist.

9. Vorrichtung zur dichten Verbindung zwischen zwei Gefäßen (1, 2), die von der Außenumgebung isoliert sind, nach Anspruch 7 oder 8, **dadurch gekennzeichnet, dass** die Trägermittel (11a) und die Bewegungsbetätigungsmittel der ersten Tür (6) um eine Achse (35) schwenkbar sind, die im Wesentlichen parallel zur ersten Öffnung (4), zum ersten Flansch (5) und zur Position des ersten Türflügels, wenn sich dieser im geschlossenen Zustand befindet, ist und insbesondere derart in den Innenraum (1a) des ersten Gefäßes (1) aufgespreizt ist, dass das Ablenkelement (25) - wenn sich der erste Türflügel (6v) im offenen Zustand befindet - rund um die erste Öffnung (4) zwischen dem Mittelteil (33) der Trägermittel (11a) oder der Bewegungsbetätigungselemente (11b) und der Innenfläche (3b) des ersten Gefäßes (1) angeordnet ist, und genauer vom Türflügel (6v) der ersten Tür (6) derart seitlich beabstandet ist, dass das Ablenkelement (25), der Türflügel (6v) der ersten Tür (6) und die innere kritische Linie LCi vom Kommunikationsbereich (13) beabstandet sind, wenn sich der erste Türflügel (6v) im offenen Zustand befindet.

10. Vorrichtung zur dichten Verbindung zwischen zwei Gefäßen (1, 2), die von der Außenumgebung isoliert sind, nach einem der Ansprüche 1 bis 9, **dadurch gekennzeichnet, dass** die Trägermittel (11a) und die Bewegungsbetätigungsmittel (11b) der ersten Tür (6) ausgebildet sind, um geeignet zu sein, den ersten Türflügel (6v) zwischen seinem geschlossenen, seinem offenem oder seinem primären offenen Zustand zu bewegen, nämlich entsprechend einer Bewegung, die eine anfängliche Spreizbewegung des ersten Türflügels (6v) weg vom ersten Flansch (5), die zumindest im Wesentlichen eine anfängliche Übersetzungsbewegung entlang einer Achse ist, die zumindest im Wesentlichen orthogonal zur ersten Öffnung (4), zum ersten Flansch (5) und zur Position des ersten Türflügels (6v), wenn sich dieser im geschlossenen Zustand befindet, oder eine anfängliche Drehbewegung um eine Achse ist, die zumindest im Wesentlichen parallel zur ersten Öffnung (4), zum ersten Flansch (5) und zur Position des ersten Türflügels (6v), wenn sich dieser im geschlossenen Zustand befindet, ist.

11. Verfahren zum Einsatz einer Vorrichtung zur dichten Verbindung zwischen zwei Gefäßen (1, 2), die von der Außenumgebung isoliert sind, nach einem der Ansprüche 1 bis 10, **gekennzeichnet durch** die folgenden aufeinanderfolgenden Arbeitsschritte:
• Bereitstellen eines ersten Gefäßes (1), dessen erste Tür (6), die einen ersten Türflügel (6v) umfasst, sich im geschlossenen Zustand befindet, und eines zweiten Gefäßes (2), dessen zweite Tür (10), die einen zweiten Türflügel (10v) umfasst, sich im geschlossenen Zustand befindet;
• Positionieren der zwei Gefäße (1, 2) nebeneinander, dichtendes Gegeneinanderdrücken des ersten Flanschs (5) und des zweiten Flanschs (9) über ihre Außenflächen und dichtendes Gegeneinanderdrücken des ersten Türflügels (6v) der ersten Tür (6) und des zweiten Türflügels (10v) der zweiten Tür (10);
• Verbinden des ersten Flanschs (5) und des zweiten Flanschs (9) und der zwei Türflügel (6v und 10v), Betätigen des ersten Türflügels (6v), um ihn zu bewegen und in den offenen Zustand zu bringen und dadurch auch den zweiten Türflügel (10b) in den offenen Zustand zu bringen, so dass das erste Gefäß (1) und das zweite Gefäß (2) über ihre entsprechenden im offenen Zustand befindlichen Öffnungen miteinander kommunizieren, wobei zwischen den zwei Gefäßen (1, 2) ein Kommunikationsbereich (13) definiert ist, der das Hindurchtreten eines bestimmten Inhalts vom einen zum anderen ermöglicht;
**dadurch gekennzeichnet, dass**, wenn sich der erste Türflügel (6v) der ersten Tür (6) und der zweite Türflügel (10v) der zweiten Tür (10) im offenen Zustand befinden, die Mittel, die strukturell in die erste Tür (6) integriert sind, und/oder Mittel, die strukturell in den zweiten Flansch (9) integriert sind, eingesetzt werden und ein Trennabstand (25, 26) zwischen dem Kommunikationsbereich (13) und der inneren ringförmigen kritischen Linie (LCi) und der äußeren ringförmigen kritischen Linie (Lce) der Vorrichtung zur dichten Verbindung ausgebildet wird.

12. Erstes Gefäß (1), das insbesondere konfiguriert ist, um mit einer Vorrichtung zur dichten Verbindung mit einem zweiten Gefäß (2) assoziiert zu sein, Folgendes umfassend:
• eine Struktur, die eine geschlossene Wand (3), welche einen Innenraum (1a) begrenzt, umfasst,
• zumindest eine Öffnung (4), die in der Wand (3) definiert und durch einen ersten Ringflansch (5) begrenzt ist, dessen Außenfläche (5a) geeignet ist, um eine Außenfläche (9a) eines komplementären zweiten Flanschs (9), der dem zweiten Gefäß (2) entspricht, dichtend dagegenzudrücken,
• Mittel zum lösbaren Halten, die zumindest teilweise mit dem ersten Flansch (5) assoziiert und geeignet sind, den ersten Flansch (5) und den zweiten Flansch (9) auf lösbare Weise über ihre Außenflächen (5a, 9a) dichtend gegeneinandergedrückt zu halten,
• eine erste Tür (6), die über bewegliche oder verformbare Trägermittel (11a) auf der Struktur gelagert ist und deren erster Türflügel (6v) derart ausgebildet und angebracht ist, dass er bewegt werden kann, um sich entweder im geschlossenen Zustand, in dem er mit dem ersten Flansch (5) zusammenwirkt, wodurch er die erste Öffnung (4) verschließt, oder im offenen Zustand, in dem er vom ersten Flansch (5) gelöst und im Innenraum (1a) angeordnet ist, wodurch er die erste Öffnung (4) öffnet, zu befinden, und dessen Außenfläche (6a) geeignet ist, um die Außenfläche (10a) des Türflügels (10v) einer komplementären zweiten Tür (10), die dem zweiten Gefäß (2) entspricht, dichtend dagegenzudrücken,
• Mittel zur lösbaren Verbindung, die zumindest teilweise mit der ersten Tür (6) assoziiert und geeignet sind, den ersten Türflügel (6v) und den zweiten Türflügel (10v) auf lösbare Weise über ihre Außenflächen (6a und 10a) gegeneinandergedrückt zu halten,
• Bewegungsbetätigungsmittel (11b), die geeignet sind, den ersten Türflügel (6v) zwischen seinem geschlossenen und seinem offenen Zustand zu bewegen, und Steuerungsmittel zur Steuerung der Bewegungsbetätigungsmittel (11b),
und wobei, wenn sich der erste Türflügel (6v) im offenen Zustand befindet, ein erster Eintritts-/Austrittsbereich (13a) im Innenraum/des Innenraums (1a), der im Allgemeinen die Form eines Zylinder-, Kegel- oder Pyramidenstumpfs aufweist, sich von der ersten Öffnung (4) und dem ersten Flansch (5) weg zumindest im Wesentlichen axial in den Innenraum erstreckt, wobei dieser erste Eintritts-/Austrittsbereich (13a) Teil eines Kommunikationsbereichs zwischen den zwei assoziierten Gefäßen ist und geeignet ist, das Hindurchtreten eines bestimmten Inhalts in den Innenraum/aus dem Innenraum von einem der zwei Gefäße zum anderen zu ermöglichen,
• das geeignet ist, über eine Vorrichtung zur dichten Verbindung nach einem der Ansprüche 1 bis 10 mit dem zweiten Gefäß (2) verbunden zu sein,
• und Mittel umfasst, die strukturell in die erste Tür (6) integriert und, wenn diese sich im offenen Zustand befindet, geeignet sind, einen Trennabstand (25) zwischen dem Kommunikationsbereich (13) und der inneren ringförmigen kritischen Linie (LCi) auszubilden, und **dadurch gekennzeichnet, dass** die strukturell integrierten Mittel (25), die geeignet sind, einen Trennabstand (25) auszubilden, die Form eines ringförmigen Ablenkelements mit geeigneten Abmessungen aufweisen, das zwischen dem Kommunikationsbereich (13) und der kritischen Linie angeordnet ist, wodurch die kritische Linie beim Hindurchtreten in den Kommunikationsbereich (13) normalerweise nicht erreichbar ist.

13. Zweites Gefäß (2), das insbesondere vorgesehen ist, um gemeinsam mit einem ersten Gefäß (1) Teil einer Vorrichtung zur dichten Verbindung zwischen den zwei Gefäßen (1, 2) zu sein,
• umfassend :
o eine zweite Wand (7), die eine zweite Öffnung (8) aufweist, welche durch einen zweiten Ringflansch (9) begrenzt ist,
o eine zweite Tür (10), deren Türflügel (10v) bewegbar angebracht und geeignet ist, sich im geschlossenen oder im offenen Zustand, in dem der zweite Türflügel (10v) die zweite Öffnung (8) verschließt bzw. öffnet, zu befinden,
• das geeignet ist, über eine Vorrichtung zur dichten Verbindung nach einem der Ansprüche 1 bis 10 mit dem ersten Gefäß (1) verbunden zu sein,
• und Mittel (26) umfasst, die strukturell in den zweiten Flansch (9) integriert und geeignet sind, einen Trennabstand (26) zwischen dem Kommunikationsbereich (13) und der äußeren ringförmigen kritischen Linie (LCe) auszubilden, wenn sich die zweite Tür (10) bzw. der zweite Türflügel (10v) im offenen Zustand befindet,
und **dadurch gekennzeichnet, dass** die strukturell integrierten Mittel (26), die geeignet sind, einen Trennabstand (26) auszubilden, die Form eines ringförmigen Ablenkelements mit geeigneten Abmessungen aufweisen, das zwischen dem Kommunikationsbereich (13) und der kritischen Linie angeordnet ist, wodurch die kritische Linie beim Hindurchtreten in den Kommunikationsbereich (13) normalerweise nicht erreichbar ist.

14. Vorrichtung zur abgedichteten Übertragung zwischen einem ersten Gefäß (1) nach Anspruch 12 und einem zweiten Gefäß (2) nach Anspruch 13, umfassend eine Vorrichtung zur dichten Verbindung zwischen den zwei Gefäßen (1, 2), die strukturell in die erste Tür (6) integrierte Mittel (25) und/oder strukturell in den zweiten Flansch (9) integrierte Mittel umfasst, die geeignet sind, einen Trennabstand (25, 26) zwischen dem Kommunikationsbereich (13) und der inneren ringförmigen kritischen Linie (LCi) und/oder der äußeren ringförmigen kritischen Linie (LCe) auszubilden, wenn die erste Tür (6) und die zweite Tür (10) bzw. die entsprechenden Türflügel (6v und 10v) der Türen (6 und 10) sich im offenen Zustand befinden.

## Claims

1. Device for a tight connection between a first housing (1) and a second housing insulated from the outside environment, such as:
- being part of a first housing (1):
-- structure including a first wall (3) limiting a first inner space (1a) is provided with a first opening (4) limited by a first annular flange (5);
-- first door (6) supported by the structure by the intermediary of mobile or deformable carrying means (11a), of which the door wing (6v) is arranged and mounted in such a way as to be able to be displaced in order to be either closed wherein it cooperates with the first flange (5) by closing the first opening (4) or open wherein it is released from the first flange (5) and placed in the inner space (1a) by opening the first opening (4);
- being part of a second housing (2):
-- second wall (7) is provided with a second opening (8) limited by a second annular flange (9);
-- second door (10) of which the door wing (10v) is mounted in displacement, able to be closed or open wherein, respectively, the second door wing (10v) closes or opens the second opening (8);
- the first flange (5) and the second flange (9) are complementary and able to be removably held against one another by their outer faces (5a, 6a) by removable means of maintaining;
- the first door wing (6v) and the second door wing (10v) are complementary and able to be held against each other hermetically by their outer faces (6a, 10a);
- removable means of fastening are able to removable hold the two door wings (6v and 10v) against each other hermetically by their outer faces (6a and 10a);
- displacement manoeuvring means are able to displace the first door wing (6v) between its closed and open states, and control means are able to control the displacement manoeuvring means (11b);
- in such a way that when the first door (6) and the second door (10), respectively their door wings (6v and 10v), are open, the first housing (1) and the second housing (2) communicate together via their respective openings (4, 8) open, a communication space (13) formed from an entrance/exit space (13a) in the first housing (1) and an entrance/exit space in the second housing (2) being arranged between the two housings (1, 2) making it possible to pass a certain content from one to the other;
- an inner annular critical line (LCi) of risk of contamination exists on the first door wing (6v) of the first door (6) and an outer annular critical line (LCe) of risk of contamination exists on the second flange (9);
- and means for protecting against the risks of contamination for the outer critical line; **characterised by** the fact that it comprises means (25) that are structurally integrated into the first door (6) and means (26) that are structurally integrated into the second flange (9), able - when the first door (6) and the second door (10), respectively their door wings (6v and 10v), are open - to form a separation (25, 26) between the communication space (13) and the inner annular critical line (LCi) and the outer annular critical line (LCe),
and **characterised by** the fact that the structurally integrated means (25, 26) able to form a separation (25, 26) have the form of an annular deflector of a suitable size placed between the communication space (13) and the critical line, with the latter thus normally not being reachable during the passage in the communication space (13) .

2. Device for a tight connection between two housings (1, 2) insulated from the outside environment according to claim 1, **characterised by** the fact that the structurally integrated means (25, 26) able to form a separation (25, 26) form means of protection against any contamination at the location of the inner annular critical line (LCi) and/or the outer annular critical line (LCe), and are structurally integrated fully into the first door (6) and/or into the second flange (9).

3. Device for a tight connection between two housings (1, 2) insulated from the outside environment according to claim 1 or 2, **characterised by** the fact that the structurally integrated means (26) able to form a separation (26) have the form of an annular deflector (26) integrated into the second flange (9), limiting the second opening (8), protruding from the free front plane of the second flange (9) forming an interface with the first flange (5), in particular an annular deflector (26) with a generally cylindrical shape or with a slightly flared free distal edge (27).

4. Device for a tight connection between two housings (1, 2) insulated from the outside environment according to claim 3, **characterised by** the fact that the annular deflector (26) forms with the outer peripheral portion of the second flange (9) an annular cavity (28) in the bottom or in the vicinity of the bottom wherein the outer critical line LCe is located.

5. Device for a tight connection between two housings (1, 2) insulated from the outside environment according to any of claims 3 and 4, **characterised by** the fact that the door wing (10v) of the second door (10) comprises an annular groove (29) opening towards the inside of the second housing (2), able to receive the deflector (26) of the second flange (9) and a swollen annular peripheral portion (30) able to include towards the inside of the annular groove (29) and to form towards the outside, a portion in the shape of a lug able to be housed in a complementary portion in the shape of a mortise (31) arranged on the outer face (6a) of the door wing (6v) of the first door (6).

6. Device for a tight connection between two housings (1, 2) insulated from the outside environment according to claim 1 or 2, **characterised by** the fact that the structurally integrated means (25) able to form a separation (25) have the form of an annular deflector (25) integrated into the first door (6), carried by or being a part of the carrying means (11a) or of the displacement manoeuvring means (11b) of the first door (6) or of the door wing (6v) of the first door (6) open and arranged around the first door (6) in particular an annular deflector (25) having a general cylindrical shape.

7. Device for a tight connection between two housings (1, 2) insulated from the outside environment according to claim 6, **characterised by** the fact that the annular deflector (25) forms with a central portion (33) carrying means (11a) or displacement manoeuvring means (11b) of the first door (6), a protective cavity (34) of the inner critical line LCi.

8. Device for a tight connection between two housings (1, 2) insulated from the outside environment according to claim 7, **characterised by** the fact that the annular deflector (25) has an axial dimension that is greater, in particular clearly greater, than the axial space of the door wing (6v) of the first door (6), in particular clearly greater, than the axial space of the assembly comprising the door wing (6v) of the first door (6) and the door wing (10v) of the second door (10) held on the door wing (6v) of the first door (6).

9. Device for a tight connection between two housings (1, 2) insulated from the outside environment according to any of claims 7 and 8, **characterised by** the fact that the carrying means (11a) and the displacement manoeuvring means of the first door (6) are in rotation about an axis (35) that is substantially parallel to the first opening (4), to the first flange (5) and to the position of the first door wing when it is closed, in particular separated in the inner space (1a) of the first housing (1), in such a way as to allow the deflector (25) - open of the first door wing (6v) - to be placed between the central portion (33) of the carrying means (11a) or of the displacement manoeuvring means (11b) and the inner face (3b) of the first housing (1) around the first opening (4), and more specially separated laterally from the door wing (6v) of the first door (6), in such a way as to space the deflector (25), the door wing (6v) of the first door (6) and the inner critical line LCi of the communication space (13) when the first door wing (6v) is open.

10. Device for a tight connection between two housings (1, 2) insulated from the outside environment according to any of claims 1 to 9, **characterised by** the fact that the carrying means (11a) and the displacement manoeuvring means (11b) of the first door (6) are arranged in order to be able to displace the first door wing (6v) between its closed or open or primary open states, according to movement comprising an initial movement of separation of the first door wing (6v) of the first flange (5) which is a movement at least substantially of initial translation along an axis at least substantially orthogonal to the first opening (4), to the first flange (5) and to the position of the first door wing (6v) closed, or a movement of initial rotation about an axis at least substantially parallel to the first opening (4), to the first flange (5) and to the position of the first door wing (6v) closed.

11. Method of implementing a device for a tight connection between two housings (1, 2) insulated from the outside environment according to any of claims 1 to 10, **characterised by** the following successive operating steps:
- there is a first housing (1) of which the first door (6) comprising a first door wing (6v) is closed and a second housing (2) of which the second door (10) comprising a second door wing (10v) is closed;
- the two housings (1, 2) are brought to be in the vicinity of one another and the first flange (5) and the second flange (9) are held against one another hermetically by their outer faces and the first door wing (6v) of the first door (6) and the second door wing (10v) of the second door (10) are brought to be held against each other hermetically;
- the first flange (5) and the second flange (9) and the two door wings (6v and 10v) are made integral and the first door wing (6v) is manoeuvred in order to displace it and bring it open and thus also bring the second door wing (10v) open, in such a way that the first housing (1) and the second housing (2) communicate together by their respective open openings, with a communication space (13) being arranged between the two housings (1, 2) allowing a certain content to be passed between them;
**characterised by** the fact that when the first door wing (6v) of the first door (6) and the second door wing (10v) of the second door (10) are open, the means structurally integrated into the first door (6) and/or means structurally integrated into the second flange (9) are implemented and a separation (25, 26) is formed between the communication space (13) and the inner annular critical line (LCi) and the outer annular critical line (LCe) of the device for a tight connection.

12. First housing (1), specially intended adapted to be associated with a device for a tight connection with a second housing (2), comprising:
- a structure including a closed wall (3) limiting an inner space (1a),
- at least one opening (4) made in the wall (3) and limited by a first annular flange (5) of which the outer face (5a) is able to ensure the hermetic thrusting onto itself of the outer face (9a) of a second complementary flange (9) belonging to the second housing (2),
- removable means of maintaining, associated at least in part with the first flange (5), able to removably maintain the first flange (5) and the second flange (9) held against each other by their outer faces (5a and 9a),
- a first door (6) supported by the structure by the intermediary of mobile or deformable carrying means (11a), of which the first door wing (6v) is arranged and mounted in such a way as to be able to be displaced in order to be either closed wherein it cooperates with the first flange (5) by closing the first opening (4) or open wherein it is released from the first flange (5) and placed in the inner space (1a) by opening the first opening (4), and of which the outer face (6a) is able to ensure the hermetic thrusting on itself of the outer face (10a) of the door wing (10v) of a second complementary door (10) belonging to the second housing (2),
- removable means of fastening associated at least in part with the first door (6), able to removable maintain the first door wing (6v) and the second door wing (10v) held against each other by their outer faces (6a and 10a),
- displacement manoeuvring means (11b) able to displace the first door wing (6v) between its closed and open states, and means for controlling the displacement manoeuvring means (11b),
and, when the first door wing (6v) is open, a first entrance/exit space (13a) in/of the inner space (1a), in the general shape of a cylindrical end, cone or pyramid, extending into the inner space at least substantially axially from the first opening (4) and from the first flange (5), with this first entrance/exit space (13a) being part of a communication space between the two associated housings and being able to make it possible to pass a certain content into/out of the inner space, from one to the other of the two housings,
- able to be attached to the second housing (2) by a device for a tight connection according to any of claims 1 to 10,
- and comprising means structurally integrated into the first door (6) able when it is open to form a separation (25) between the communication space (13) and the inner annular critical line (LCi),
and **characterised by** the fact that the structurally integrated means (25) able to form a separation (25) have the form of an annular deflector of appropriate size placed between the communication space (13) and the critical line, with the latter thus normally not being reachable during the passage in the communication space (13) .

13. Second housing (2), specially intended to be a part with a first housing (1) of a device for a tight transfer between the two housings (1, 2),
- comprising:
-- second wall (7) provided with a second opening (8) limited by a second annular flange (9),
-- second door (10) of which the door wing (10v) is mounted in displacement, able to be closed or open wherein, respectively, the second door wing (10v) closes or opens the second opening (8),
- able to be attached to the first housing (1) by a device for a tight connection according to any of claims 1 to 10,
- and comprising means (26) structurally integrated into the second flange (9) able when the second door (10), respectively the second door wing (10v), is open to form a separation (26) between the communication space (13) and the outer annular critical line (LCe),
and **characterised by** the fact that the structurally integrated means (26) able to form a separation (26) have the form of an annular deflector of appropriate size placed between the communication space (13) and the critical line, with the latter thus normally not being reachable during the passage in the communication space (13) .

14. Device for a tight transfer between a first housing (1) according to claim 12 and a second housing (2) according to claim 13, comprising a device for a tight connection between the two housings (1, 2) provided with means (25) structurally integrated into the first door (6) and/or means (26) structurally integrated into the second flange (9), able - when the first door (6) and the second door (10), respectively the door wings (6v and 10v) of the doors (6 and 10) are open - to form a separation (25, 26) between the communication space (13) and the inner annular critical line (LCi) and/or the outer annular critical line (LCe).
